# EUROPEAN PATENT APPLICATION

(11) **EP 4 040 116 A1**
(43) Date of publication of application: **10.08.2022**
(21) Application number: 21275014.5
(22) Date of filing: 09.02.2021
(51) Int. Cl.: G01D 5/244

(54) **METHOD OF MOUNTING A ROTARY SCALE MEMBER**

(71) Applicant: Renishaw PLC, Wotton-under-Edge, Gloucestershire GL12 8JR (GB)
(72) Inventor: HENSHAW, James, Reynolds, Wotton-under-Edge, Gloucestershire GL12 8JR (GB); HARRISON, Matthew, Damian, Wotton-under-Edge, Gloucestershire GL12 8JR (GB)
(74) Representative: Rolfe, Edward William

(57) **Abstract**

A method of mounting a rotary scale member on a part (e.g. of an articulated joint), the rotary scale member comprising an annular body on which a series of position features defining a scale is provided, and at least one mounting flexure configured to engage the part, the method comprising: force-fitting the rotary scale member and the part together, whereby the at least one flexure is displaced by the part and thereby urged via a radial reaction force into engagement with the part so as to form a friction fit with the part such that the annular body of the rotary scale member self-locates at an initial default radial location with respect to the part; and tweaking the radial location of the annular body relative to the part away from its initial default radial location to a new radial location.

## Description

This invention relates to a method of mounting a rotary encoder, a rotary scale, and an encoder apparatus comprising a rotary scale and a readhead for reading the rotary scale.

Metrological scales are used in the position measurement of parts of a machine which can move relative to each other. A metrological scale typically has a series of features on it which can be read by a readhead so that the readhead can provide a measure of its position along, or around, the scale. The metrological scale can be mounted onto one part of a machine and is read by a suitable readhead which is attached to the other part of the machine. Types of metrological scale include magnetic scales (in which the scale features are provided by features having particular magnetic properties), capacitive scales (in which the scale features are provided by features having particular capacitive properties), inductive scales (in which the scale features are provided by features having particular inductive properties) and optical scales (in which the scale features are provided by features having particular optical properties). Optical scales can be transmissive or reflective. An example of an optical scale configuration is disclosed in EP-A-0 207 121 and also US-A-4,974,962.

For measuring rotary displacement, such a scale may be provided on a member which rotates in use with the shaft or other rotary part relative to the readhead. In particular, the member which has the scale features and which rotates in use with the shaft can be an annular body, in the form of a disc or a ring.

It can be desirable for the rotary scale member to have the ability to centre itself on the shaft it is to be mounted on. In the field that the present inventors are working, they are required to ensure that the eccentricity of the rotary scale member on the shaft is very low, typically less than 10µm (much less than the width of a typical human hair). There have been many attempts to make self-centring rotary encoders, such as those described in US6255644 and US6293021. However, our inventors have found existing solutions to be unsatisfactory, in particular for very thin/planar/compact rotary encoders, and also where there is high demands on self-centring ability of the scale member.

Accordingly, the present invention relates to an improved method of mounting a rotary encoder and also to an improved rotary scale member. In particular, the invention relates to a rotary scale member, comprising an annular body on which a series of position features defining a scale is provided, having one or more flexures, configured to enable tweaking of the radial location of the rotary scale member relative to the part on which it is mounted (in particular without significant distortion of at least the part of the annular body on which the scale is provided).

According to a first aspect of the invention there is provided a method of mounting a rotary scale member on a part (e.g. of an articulated joint), the rotary scale member comprising an annular body on which a series of position features defining a scale is provided, and at least one (e.g. "mounting") flexures (e.g. configured to engage the part), the method comprising: push/force fitting the rotary scale member and the part together, whereby the at least one flexure is displaced by the part and thereby urges the rotary scale member (via a radial reaction force) into engagement with the part so as to form a friction fit with the part such that the annular body of the rotary scale member self-locates at an initial default/predetermined radial location with respect to the part; and tweaking (in other words "adjusting", or "fine-tuning") the radial location of the annular body relative to the part away from its initial default/predetermined radial location to a new radial location.

With the present invention, the act of push/force fitting (or in other words, "press" or "interference" fitting) causes the at least one flexure to be displaced/deformed from their default/rest/relaxed configuration and thereby urge the rotary scale member against the part (e.g. a shaft), which in turn causes the flexures to hold the annular body at an initial default/predetermined location with respect to the part on which it is mounted. However, the inventors are recognising that the self-locating/centring ability of the rotary scale member might not be perfect and/or the part on which it is mounted might not be centred on the axis of rotation, and so they are departing from relying on just the self-locating/centring ability of the rotary scale member, and are deliberately taking steps to move the annular body away from its initial default/predetermined radial location, so as to thereby improve the annular body's radial location. The amount of radial adjustment desired is incredibly small (e.g. less than 50µm, and can be as small as a few microns). Being able to effect such a minuscule radial adjustment consistently and reliably is particularly challenging, but when achieved, this can help to fine-tune/optimise the performance of the encoder, thereby providing a superior encoder set up.

It is desirable to avoid significant deformation of at least the part of the annular body on which the series of position features is provided because such deformations can adversely affect the metrological performance of the rotary scale member. Accordingly, preferably the shape and size of at least the part of the annular body on which the scale is provided is substantially unaltered by said tweaking of the radial location. Rather, preferably such tweaking primarily causes a change in the state of flex of one or more of the at least one flexure(s). For instance, tweaking can change the extent of displacement or deformation of at least one of the at least one flexure(s) from its/their rest position/configuration, and thereby substantially isolate the scale from any deformation caused by the tweaking. Preferably, the at least one flexure is radially compliant/deflectable (e.g. by way of bending) in order to facilitate such tweaking of the radial location. As will be understood, preferably the at least one flexure is sufficiently resilient (i.e. provide a sufficiently high radial reaction force in reaction to being deformed away from their natural rest state) so as to form said friction fit with the part such that the annular body of the rotary scale member self-locates at an initial default/predetermined radial location with respect to the part.

Preferably, the rotary scale member comprises at least two flexures, for example at least three flexures (which, by the act of force-fitting the rotary scale member and the part together, are displaced and thereby urge the rotary scale member via a radial reaction force into engagement with the part so as to form a friction fit with the part such that the annular body of the rotary scale member self-locates at an initial default radial location with respect to the part). Optionally, the at least two (for example at least three) flexures are annularly spaced. Optionally, the at least two (for example at least three) flexures are equiangularly spaced.

At least one of, and optionally all of the, at least one flexure could be configured to (e.g. directly) engage the part, when mounted on the part.

The at least one flexure could be referred to as "mounting" flexure, in that the rotary scale member can be mounted onto a part via the flexure(s).

The annular body can comprise a planar disc. The series of position features can be provided on a planar face of the planar disc (as opposed to on the peripheral edge, which is more commonly associated with a ring scale/encoder). Accordingly, the rotary scale member can be a disc scale member, e.g. for a disc encoder. Optionally, the planar disc is not more than 5mm thick, for instance not more than 3mm thick, for example about 1 mm thick. Preferably, the at least one annularly spaced flexure is provided substantially in plane with the planar disc. This provides for a particularly compact rotary/disc scale member.

The at least one flexure could be provided on a member (e.g. a hub) which is formed separately from, but attached to, the annular body. However, preferably the at least one flexure(s) is(are) integrally formed on the annular body. For instance, the annular body on which the scale track is provided, and the at least one flexure can be formed from a single piece of material. Again, this helps to provide for a particularly compact rotary scale member, as well as helps to ensure that the radial reaction forces are contained in the plane of the annular body. For example, the annular body and the at least one flexure could be formed (e.g. cut) from a single sheet or plate of material (e.g. metallic material).

Preferably, the annular body comprises a metallic material, but as will be understood, other materials could be used. However, metallic materials are particularly preferred when the at least one flexure is integrally formed on the annular body.

Optionally, at least one of (and optionally all of) the at least one flexure(s) is (are) configured to be compliant both radially and tangentially. For example, at least one of (and optionally all of) the at least one flexure(s) can comprise a foot portion configured to engage the part on which it is mounted, wherein the flexure is configured such that the foot portion is both radially and tangentially compliant relative to the annular body. For instance, the foot portion could be attached to the annular body by one or more legs/leg portions. For example, the foot portion could itself be radially compliant and the one or more legs could provide the tangential compliance. The radial and/or tangential compliance could be provided by bending of the relevant part (e.g. by the bending of the foot along its length, or by the bending of the leg(s) along its(their) length). For instance, the rotary scale member could comprise four radially and tangentially compliant, equiangularly spaced, flexures.

Optionally, a flexure comprises a radial adjustment flexure member wherein the radial adjustment flexure member is connected to the annular body by at least one tangentially compliant support (e.g. via one or more "legs"). The radial adjustment flexure member can comprise at least one feature (e.g. side) against which a radial adjustment device (described in more detail below)can push against so as to effect radial adjustment of the annular body. The radial adjustment flexure member can comprise front and back sides between which a radial adjustment device can be located and against which the radial adjustment device can push, so as to effect a radial adjustment of the annular body,

Tweaking can comprise applying a radial adjustment force (or displacement) to the rotary scale member (e.g. to the annular body) in a direction which is substantially non-perpendicular to the radial reaction force of all of the at least one flexure. For some embodiments and implementations, this has been found to be helpful for facilitating predictable and precise control over the adjustment of the radial position, for example when the flexures have little or no tangential compliance.

For example, tweaking can comprise applying a radial adjustment force (or displacement) to the rotary scale member (e.g. to the annular body), such that, for each of the at least one flexure(s), the angle between the direction along which the adjustment force (or displacement) reacts with the shaft (e.g. the direction along which the adjustment force is applied) and a line extending perpendicular to the radial reaction force of the annularly spaced flexure, is greater than the inverse tan of the coefficient of friction between the flexure and the part (e.g. shaft/hub) on which it is mounted.

For example, tweaking can comprise applying a radial adjustment force (or displacement) to the rotary scale member (e.g. to the annular body), such that, for each of the at least one flexures, the angle between the direction along which the force (or displacement) reacts with the shaft (e.g. the direction along which the adjustment force is applied) and a line extending perpendicular to the radial reaction force of the annularly spaced flexure, is not less than 5°, more preferably not less than 10°, even more preferably not less than 15°, for example not less than 25°. For example, in the case of there being three equiangularly spaced flexures, tweaking can comprise applying a radial adjustment force (or displacement) to the rotary scale member (e.g. to the annular body) along a direction which is parallel to the direction of the radial reaction force of one of the three annularly spaced flexures, and therefore is at an angle of 30° to a line extending perpendicular to the radial reaction force of the other two flexures.

The at least one flexure could be located radially outward of the series of position features defining the scale. For example, the flexure(s) could be located on or toward the outer periphery of annular body. Preferably, the flexure(s) are located radially inward of the series of position features defining the scale.

The rotary scale member could comprise four, equiangularly spaced (i.e. at 90°) flexures. In such a case, tweaking can comprise applying a radial adjustment force in a direction which is parallel to the radial reaction force of two of the flexures and perpendicular to the other two flexures. In particular, the rotary scale member could comprise four radially and tangentially compliant, equiangularly spaced, flexures, and in which said tweaking comprises applying a radial adjustment force in a direction which is parallel to the radial reaction force of two of the flexures and perpendicular to the other two flexures. Such configurations can provide for intuitive adjustment of the radial location of the annular body.

The annular body (e.g. the planar disc) can comprise a hole therethrough for receiving said part on which it is mounted. The hole can be substantially centrally located within the annular body (e.g. planar disc). The at least one flexure(s) can be provided around the edge/perimeter/boundary/circumference of the hole. Accordingly, the at least one flexure can face radially inward, toward the centre of the hole, and can be configured to flex radially outward when mounted on the part. The at least one flexure can define the hole.

Tweaking the radial location can comprise (e.g. manually) manipulating at least one radial adjustment device (or "element"). Accordingly, manipulating at least one radial adjustment device can be used to control a radial adjustment force (or "displacement") which acts on the rotary scale member (in particular, on the annular body).

The radial adjustment device can comprise a rotatable radial adjustment device. Accordingly, tweaking the radial location can comprise rotating at least one rotatable radial adjustment device to control a radial adjustment force (or "displacement") on the rotary scale member. Manipulating the at least one radial adjustment device comprises rotating the radial adjustment device about an axis. The rotatable radial adjustment device can comprise a threaded member, for example a bolt or screw. The threaded part of the threaded member could be configured to engage a corresponding threaded member (e.g. a threaded hole) on the part on which the rotary scale member is mounted. Rotating the radial adjustment device about the axis can cause the radial adjustment device to move along the axis. The axis can extend substantially parallel to the rotary scale member's axis (i.e. the axis about which it is configured to rotate). For example, rotating the radial adjustment device about the axis can cause the radial adjustment device to move along the axis, further into a threaded hole in the part on which the rotary scale member is mounted. In the case in which the part is a shaft, the threaded hole could be provided on a radially extending protrusion (e.g. a ledge or flange) which could be attached to the shaft, for example.

The apparatus used with the method of the invention can be configured such that at least the part of the radial adjustment device which engages the rotary scale device (e.g. a flexure) can be at least partially decoupled (e.g. at least in the radial direction) from the part on which the rotary scale member is mounted. Such decoupling enables at least a portion of the radial adjustment device to "follow" or "track" a change in lateral (e.g. radial) position of the annular body caused by a radial adjustment device, e.g. such that it doesn't itself fight against such a change in lateral (e.g. radial) position. For instance, the radial adjustment device could be received in a void defined by the rotary scale member (e.g. a flexure), and the centre point of that void could shift with a change in radial position of the annular body, and such decoupling can allow at least the part of the radial adjustment device which engages the rotary scale member to follow or "track" the centre point of said void, e.g. by up to at least +/- 100µm from its default/central position, optionally by up to at least +/- 150µm, preferably by up to at least +/-200µm, for example by up to at least +/- 400µm. Even if only much smaller adjustments are needed (e.g. in the order of a few, or few tens of microns, providing a significantly larger range of motion helps to facilitate such small adjustment.

For instance, the apparatus can be configured such that when the radial adjustment device is engaged with the part on which the rotary scale member is mounted and the radial adjustment device in engagement with the rotary scale member (e.g. a flexure), the part of the radial adjustment device which is in engagement with the rotary scale member is sufficiently decoupled from the part on which the rotary scale is mounted such that the part of the radial adjustment device which is in engagement with the rotary scale member is freely (e.g. without distortion of the radial adjustment device) laterally/radially displaceable from its default/central lateral/radial position, by at least +/- 100µm, for example at least +/- 150µm, preferably at least +/- 200µm, for instance at least +/- 400µm.

For example, in the case in which the radial adjustment device comprises a threaded portion for engaging a threaded member on the part on which the rotary scale member is mounted, and a tapered portion for engaging the rotary scale member (e.g. a flexure) (e.g. the radial adjustment device comprises an adjustment screw or bolt), the threaded members can be configured to permit tilting of the radial adjustment device, such that the tapered portion is able to shift in the radial direction with respect to the threaded member on the part. For instance, the apparatus can be configured such that when the threaded portion of the radial adjustment device is engaged with the threaded member on the part on which the rotary scale member is mounted, and when the tapered portion of the radial adjustment device is in engagement with the rotary scale member (e.g. a flexure), the tapered portion is sufficiently decoupled from said part such that the radial adjustment device can freely tilt relative to the threaded member on the part on which the rotary scale member is mounted, such that the tapered portion is freely (e.g. without distortion of the radial adjustment device) laterally/radially displaceable from its default/central lateral/radial position by at least 5% of the diameter of the threaded portion of the radial adjustment device (e.g. its outer, thread diameter), for example at least 10% of the diameter of the threaded portion of the radial adjustment device.

The at least one radial adjustment device can engage directly on the rotary scale member, e.g. on the annular body and/or at least one of the flexures. For example, the radial adjustment device can be received in a void located behind a flexure and can be configured to push against the back of the flexure, e.g. against the back of the flexure and the annular body.

The radial adjustment device can comprise a tapered portion (e.g. a tapered head) which engages the rotary scale member (e.g. a flexure), wherein rotation of the radial adjustment device controls the depth of the tapered portion within a void defined by the rotary scale member (e.g. a flexure), and hence the extent by which the rotary scale member (e.g. a flexure) is pushed by the radial adjustment device. Such a configuration has been found to be advantageous for providing a very fine degree of control over the radial adjustment.

As will be understood, an operator can use a tool, such as a screwdriver, or a hex or "Allen" key, to manipulate the radial adjustment device.

Rather than the radial adjustment device directly engaging the rotary scale member, the radial adjustment device could instead act on an intermediate member located between the rotatable radial adjustment device and the rotary scale member. In other words, optionally the radial adjustment force is applied to the rotary scale member via an intermediate member located between the rotatable radial adjustment device and the rotary scale member.

An intermediate member could, for example, comprise an O-ring or a plug into which a radial adjustment device can be inserted, and which is configured to expand as the radial adjustment device is pushed further into the plug.

It can be preferred that an intermediate member in the form of a temporary jig member is provided. The jig is "temporary" in that it is only "temporarily" fitted to the rotary scale member during installation. The temporary jig member can be configured to help control the direction of the radial adjustment forces. For instance, the temporary jig can be configured to guide one or more of said rotatable radial adjustment devices. The temporary jig can be configured to fit with the rotary scale member at one or more predetermined configurations. For instance, they can comprise reciprocal (in other words, "cooperating", or "corresponding") features configured to fit together (e.g. at one or more predetermined configurations, e.g. at one or more predetermined rotational positions about rotary scale member's axis of rotation). The method can comprise mounting the temporary jig member with respect to the rotary scale member, (e.g. they can be "plugged" together). The method can then comprise tweaking the radial location of the annular body by manipulating (e.g. rotating) at least one (e.g. rotatable) radial adjustment device which controls the radial adjustment force applied to the rotary scale member by the temporary jig member along a predetermined direction relative to the flexure(s). The predetermined direction could be non-perpendicular to the flexures' radial reaction force. The method can then comprise securing the annular body at its adjusted radial location, and removing the temporary jig member.

As will be understood, the annular body can be fixed/secured/maintained at its new/tweaked radial location. Accordingly, the method can comprise fixing/securing the annular body at its new/tweaked radial location. Accordingly, the method comprises fixing/securing the radial location of the annular body relative to the part in its new radial location via fixing means, for example via one or more mechanical fasteners and/or adhesive. For instance, the radial location of the annular body relative to the part in its new radial location can be maintained by one or more radial adjustment devices (or "elements"). Optionally, the method comprises fixing/securing the radial location of the annular body relative to the part in its new radial location via means other than the radial adjustment device. For example, a substance (such as an adhesive) or a mechanical fastener other than the radial adjustment device can be used. In this case, the one or more radial adjustment devices can be removed or left in place.

The at least one flexure can be provided either as a single flexure, or as a cluster of commonly acting flexures, for example a pair of flexures. Accordingly, in embodiments in which there are two or more annularly spaced flexures, they can be provided either as single flexures, or as clusters of commonly acting flexures, for example pairs of flexures. Preferably, the direction and magnitude of the radial reaction force of each flexure in a flexure cluster or flexure pair is substantially/nominally the same.

Accordingly, references above to at least two (e.g. three) annularly spaced flexures includes references above to at least two (three) clusters or two (three) pairs of annularly spaced flexures.

The flexure(s) can be cantilevered flexure(s)/spring member(s). This can be particularly preferred when the flexures are provided in pairs. Each flexure member in a pair can be configured such that their free ends are proximal each other and their fixed (or "root") ends are distal each other.

The (e.g. pairs of) annularly spaced flexures could be substantially equiangularly spaced. For example, in one preferred embodiment, the rotary scale member comprises three (or three pairs of) annularly spaced flexures, located substantially 120° apart from each other.

Preferably, the series of position features defining the scale are integrally formed on the annular body. This is opposed to the series of position features defining the scale being formed on another substrate which is attached to the annular body.

Preferably, all of the at least two (e.g. three) annularly spaced flexures are substantially identical to each other such that the magnitude of the radial reaction force provided by them is nominally the same. In the case of pairs of annularly spaced flexures, preferably each flexure member in a pair is substantially identical in configuration.

The flexure(s) can be (radially and optionally also tangentially) compliant/deflectable (e.g. by way of bending) in a plane perpendicular to the axis about which the scale features are formed on the rotary scale member/annular body.

A (e.g. manually manipulable) radial adjustment device can be configured to act on the flexure(s) so as change the extent of deflection of the flexure(s) in said plane and thereby facilitate adjustment of the radial position of the rotary scale member relative to the part on which it is mounted.

The apparatus can be configured such that there is a smaller than 1-to-1 relationship between i) the effect the radial adjustment device has on the extent of displacement of the flexure(s) in said plane at their point of interaction in the plane perpendicular to the axis about which the scale features are formed on the rotary scale member; and ii) the extent of the resulting radial displacement the flexure(s) has on the annular body of the rotary scale member. Such a configuration can provide a lever-ratio effect which can help to provide even more precise control over the adjustment force applied to the rotary scale member.

According to another aspect of the invention there is provided an apparatus comprising: i) a rotary scale member comprising an annular body on which a series of position features defining a scale is provided, and at least one (e.g. "mounting") flexure (e.g. configured to engage a part so as to mount and locate the rotary scale member on the part); and ii) at least one radial adjustment device which can be manipulated so as to effect a change in the radial location of the annular body with respect to the part on which the rotary scale member is mounted, wherein the at least one radial adjustment device is at least partially decoupled from the part. Such decoupling enables at least a portion of the radial adjustment device to follow or "track" a change in radial position of the annular body caused by a radial adjustment device, i.e. such that it doesn't itself fight against such a change in radial position. For instance, the radial adjustment device could be received in a void defined by the rotary scale member, and the centre point of that void could shift with a change in radial position of the annular body, and such decoupling can allow at least the part of the radial adjustment device which engages the rotary scale member to follow or "track" the centre point of said void. As will be noted, this aspect of the invention does not require the apparatus to be configured such that it requires a force fitting of the rotary scale member on the part onto which it is to be mounted. Accordingly, with regard to this aspect of the invention, it is not necessary for there to be an initial tight fit between the rotary scale member and the part onto which it is to be mounted. E.g. in the case in which the rotary scale member comprises a hole with at least three flexures defining a default inner periphery diameter of the hole, it is not necessary for the default inner periphery diameter of the hole defined by the flexure(s) to be smaller than the diameter of the part (e.g. shaft/hub) of the rotatable member on which it is to be mounted. However, as described above, it can be advantageous that the apparatus is configured such that the step of locating the rotary scale member on the part method does comprise force-fitting the rotary scale member and the part together, such that the flexure(s) is (are) displaced by the part and thereby urged via a radial reaction force into engagement with the part so as to form a friction fit with the part such that the annular body of the rotary scale member self-locates at an initial default radial location with respect to the part. In particular, it can simplify and speed up the subsequent radial tweaking.

As per the above described embodiment, preferably the apparatus is configured such that effecting a change in the radial location of the annular body with respect to the part on which the rotary scale member is mounted causes a change in the state of flex of one or more of the at least one flexure. In particular, the apparatus can be configured such that effecting a change in the radial location of the annular body changes the extent of displacement or deformation of at least one of the at least one flexure from its rest position, thereby substantially isolating the scale from any deformation.

Optionally the radial adjustment device comprises a threaded portion configured to engage a corresponding threaded member provided on the part on which the rotary scale member is mounted, and also comprises a tapered portion configured to engage the rotary scale member (e.g. a flexure). The radial adjustment device can be configured such that rotation thereof about an axis causes a change in the "depth" or "axial position" of the tapered portion with respect to the rotary scale member which in turn changes the effect the radial adjustment device has on the annular body's radial location. As described above, the axis of the radial adjustment device can be non-parallel to the radius of the rotary scale member (e.g. can be substantially perpendicular to the radius of the rotary scale member). Accordingly, the radial adjustment device can be configured such that at least at its tapered portion, it is able to move with respect to the part on which the rotary scale member is mounted in the radial direction. For instance, the apparatus could be configured such that the threaded portion of the radial adjustment device and the threaded member on the part engage only at a point distal the tapered portion of the radial adjustment device, such that the radial adjustment device can tilt so that the tapered portion can follow any change in centre point of the void in which it is received.

According to another aspect of the invention there is provided an apparatus comprising: i) a rotary scale member comprising an annular body on which a series of position features defining a scale is provided, and at least one (e.g. "mounting") flexure configured to engage a part (e.g. of an articulated joint) so as to mount and locate the rotary scale member on the part; and ii) a radial adjustment jig member for one or more rotatable radial adjustment devices for effecting radial adjustment of the annular body of the rotary scale member. The radial adjustment jig member and rotary scale member can comprise cooperating features which enable them to be temporarily fitted (in other words "plugged") together at one or more predetermined configurations (i.e. orientations), such that rotation of a rotatable member causes a radial adjustment force to be transferred to the rotary scale member along a predetermined direction relative to the at least one flexure. As will be noted, this aspect of the invention does not require the apparatus to be configured such that it requires a force fitting of the rotary scale member on a part onto which it is to be mounted. Accordingly, with regard to this aspect of the invention, it is not necessary for there to be an initial tight fit between the rotary scale member and the part onto which it is to be mounted. E.g. in the case in which the rotary scale member comprises a hole with at least one flexure defining a default inner periphery diameter of the hole, it is not necessary for the default inner periphery diameter of the hole defined by the flexure(s) to be smaller than the diameter of the part (e.g. shaft/hub) of the rotatable member on which it is to be mounted. However, as described above, it can be advantageous that the apparatus is configured such that the step of locating the rotary scale member on the part method does comprise force-fitting the rotary scale member and the part together, such that the flexure(s) is (are) displaced by the part and thereby urged via a radial reaction force into engagement with the part so as to form a friction fit with the part such that the annular body of the rotary scale member self-locates at an initial default radial location with respect to the part. In particular, it can simplify and speed up the subsequent radial tweaking.

The features described above and below in connection with the other aspects of the invention are equally applicable to this aspect of the invention and vice versa. In particular, for example, the apparatus can be configured such that effecting a change in the radial location of the annular body changes the extent of displacement or deformation of at least one of the at least one flexure from its rest position, thereby substantially isolating the scale from any deformation.

According to another aspect of the invention there is provided a rotary scale member comprising an annular body on which a series of position features defining a scale is provided, and at least one (e.g. "mounting") flexure configured to engage a part (e.g. of an articulated joint), in which the at least one flexure is radially and tangentially compliant. As will be noted, this aspect of the invention does not require the rotary scale member to be configured such that it requires a force fitting of the rotary scale member onto a part onto which it is to be mounted. Accordingly, with regard to this aspect of the invention, it is not necessary for there to be an initial tight fit between the rotary scale member and the part onto which it is to be mounted. E.g. in the case in which the rotary scale member comprises a hole with at least one flexure defining a default inner periphery diameter of the hole, it is not necessary for the default inner periphery diameter of the hole defined by the flexure(s) to be smaller than the diameter of the part (*e.g.* shaft/hub) of the rotatable member on which it is to be mounted. However, as described above, it can be advantageous that the apparatus is configured such that the step of locating the rotary scale member on the part method does comprise force-fitting the rotary scale member and the part together, such that the flexure(s) is (are) displaced by the part and thereby urged via a radial reaction force into engagement with the part so as to form a friction fit with the part such that the annular body of the rotary scale member self-locates at an initial default radial location with respect to the part. In particular, it can simplify and speed up the subsequent radial tweaking.

Optionally, the at least one flexure (e.g. at least two, for instance at least three, annularly spaced flexures) is (are) integrally formed on the annular body. Optionally, the at least one flexure comprises a void into which a radial adjustment device can be located and used to control the extent of radial deflection the flexure(s). Optionally, the at least one flexure comprises a radial adjustment flexure member comprising a feature against which a radial adjustment device can engage and push so as to effect a radial adjustment of the annular body, wherein the radial adjustment flexure member is connected to the annular body by at least one tangentially compliant support.

The features described above and below in connection with the other aspects of the invention are equally applicable to this aspect of the invention and vice versa. In particular, for example, the rotary scale member can be configured such that effecting a change in the radial location of the annular body changes the extent of displacement or deformation of at least one of the flexure(s) from its (their) rest position, thereby substantially isolating the scale from any deformation.

According to another aspect of the invention there is provided an apparatus comprising: a rotatable member rotatable about an axis, and a rotary scale member having an annularly extending series of features which form a scale, the rotary scale member comprising a hole for receiving a part (*e.g*. shaft/hub) of the rotatable member (e.g. wherein the part is substantially coaxial with the axis of rotation), and at least one (e.g. integral) flexure provided at the boundary of the hole, in which the part of the rotatable member and the hole are sized such that when the part of the rotatable member is located in the hole it causes the flexure to be displaced from its rest position such that it is radially biased against the part and thereby locates the rotary scale member relative to the rotary member (e.g. at an initial radial location).

Accordingly, the at least one (e.g. integral) flexure defines a default inner periphery diameter of the hole which is smaller than the diameter of the part (*e.g.* shaft/hub) of the rotatable member on which it is to be mounted.

Preferably, the rotary scale member comprises a (thin) planar disc, wherein the series of features which form the scale are provided on a planar face of the planar disc.

At least one radial adjustment device can be provided, such that the radial position of the scale on the planar disc scale member can be adjusted. Preferably, the apparatus is configured such that it is ensured that the at least one flexure will engage (e.g. grip) the rotatable member so as to be sufficiently urged via a radial reaction force into engagement with the part so as to form a friction fit with the part so as to hold it on the part, irrespective of the state of the at least one radial adjustment device.

Preferably, at least two (or two pairs of) flexures, and optionally at least three (or three pairs of) flexures, are provided at the boundary of the hole, and are annularly spaced around the hole (e.g. equiangularly).

The features described above and below in connection with the other aspects of the invention are equally applicable to this aspect of the invention and vice versa. In particular, for example, the apparatus can be configured such that effecting a change in the radial location of the annular body changes the extent of displacement or deformation of at least one of the at least one flexure from its rest position, thereby substantially isolating the scale from any deformation.

According to another aspect of the invention there is provided a method of mounting a disc scale member on a part, the disc comprising an annular planar body having a series of position features defining a scale on a planar face of the annular planar body, and one or more flexures (e.g. configured to engage the part and thereby) configured to provide a radial reaction force, the method comprising locating the disc scale member on the part and subsequently using one or more radial adjustment members to tweak the radial location of the annular planar body relative to the part, wherein the extent by the which the one or more flexures are radially displaced is changed by said tweaking. As will be noted, this aspect of the invention does not require a force fitting of the disc scale member on the part. Accordingly, with regard to this aspect of the invention, it is not necessary for there to be an initial tight fit between the part and the disc scale member. E.g. in the case in which the disc scale member comprises a hole with at least three flexures defining a default inner periphery diameter of the hole, it is not necessary for the default inner periphery diameter of the hole to be smaller than the diameter of the part (*e.g*. shaft/hub) of the rotatable member on which it is to be mounted. However, it can be advantageous that the apparatus is configured such that the step of locating the scale disc member on the part method does comprise force-fitting the rotary scale member and the part together. In particular, it can simplify and speed up the subsequent radial tweaking.

The features described above and below in connection with the other aspects of the invention are equally applicable to this aspect of the invention and vice versa. In particular, for example, the disc scale member can be configured such that effecting a change in the radial location of the annular body changes the extent of displacement or deformation of at least flexure from its rest position, thereby substantially isolating the scale from any deformation.

According to another aspect of the invention there is provided an apparatus comprising: i) a rotary scale member mounted on a part, the rotary scale member comprising an annular body on which a series of position features defining a scale is provided for providing a measure of rotational position about an axis, and a (e.g. "mounting") flexure formed therein which is deflectable in a plane perpendicular to the axis, and ii) a (e.g. manually manipulable) radial adjustment device configured to act on the flexure and which is manipulatable so as change the extent of deflection of the flexure in said plane and thereby facilitate adjustment of the radial position of the rotary scale member relative to the part. The apparatus can be configured such that there is a smaller than 1-to-1 relationship between a) the effect the radial adjustment device has on the extent of displacement of the flexure in said plane at their point of interaction; and b) the extent of the resulting radial displacement the flexure has on the annular body of the rotary scale member. As will be noted, this aspect of the invention does not the rotary scale member to be configured such that it requires a force fitting of the rotary scale member on the part onto which it is to be mounted. Accordingly, with regard to this aspect of the invention, it is not necessary for there to be an initial tight fit between the part and the rotary scale member. E.g. in the case in which the rotary scale member comprises a hole with at least one flexure defining a default inner periphery diameter of the hole, it is not necessary for the default inner periphery diameter of the hole defined by the flexure(s) to be smaller than the diameter of the part (*e.g*. shaft/hub) of the rotatable member on which it is to be mounted. However, as described above, it can be advantageous that the apparatus is configured such that the action of locating the rotary scale member on the part method does comprise force-fitting the rotary scale member and the part together, such that the flexure(s) are displaced by the part and thereby urged via a radial reaction force into engagement with the part so as to form a friction fit with the part such that the annular body of the rotary scale member self-locates at an initial default radial location with respect to the part. In particular, it can simplify and/or speed up the subsequent radial tweaking.

The features described above and below in connection with the other aspects of the invention are equally applicable to this aspect of the invention and vice versa. In particular, for example, the apparatus can be configured such that effecting a change in the radial location of the annular body changes the extent of displacement or deformation of the flexure(s) from its (their) rest position, thereby substantially isolating the scale from any deformation.

According to another aspect of the invention there is provided an apparatus comprising: i) a rotary scale member comprising an annular body on which a series of position features defining a scale which extends around an axis; ii) a (e.g. manually manipulable) radial adjustment device (optionally comprising a threaded member and optionally having a tapered head); and iii) an intermediate member against which the radial adjustment device (e.g. the tapered head) engages, and is configured to be displaced by the radial adjustment device (e.g. the tapered head) as the (e.g. axial) position of the radial adjustment device (e.g. the threaded member) is adjusted, and in turn cause an adjustment of the radial position of the annular body, wherein the ratio of i) the displacement of the intermediate member caused by the radial adjustment device (e.g. the tapered head) and ii) the radial displacement of the annular body is less than 1: 1. As will be noted, this aspect of the invention does not require a force fitting of the disc on the part. Accordingly, with regard to this aspect of the invention, it is not necessary for there to be an initial tight fit between the part and the disc scale member. E.g. in the case in which the disc scale member comprises a hole with at least one flexure defining a default inner periphery diameter of the hole, it is not necessary for the default inner periphery diameter of the hole to be smaller than the diameter of the part (*e.g*. shaft/hub) of the rotatable member on which it is to be mounted.

The features described above in connection with the other aspects of the invention are equally applicable to this aspect of the invention and vice versa. In particular, for example, the apparatus can be configured such that effecting a change in the radial location of the annular body changes the extent of displacement or deformation of the flexure(s) from their rest position, thereby substantially isolating the scale from any deformation.

According to another aspect of the invention there is provided an apparatus comprising: a part of a machine; a rotary scale member mounted on the part, the rotary scale member comprising an annular body on which a series of position features defining a scale is provided, and at least one flexure; at least one radial adjustment device which can be manipulated so as to effect a change in the radial location of the annular body with respect to the part on which the rotary scale member is mounted, wherein the at least one radial adjustment device is at least partially decoupled from the part such that said at least a portion of the radial adjustment device is configured to follow a change in radial location of the annular body caused by the radial adjustment device. The features described above in connection with the other aspects of the invention are equally applicable to this aspect of the invention and vice versa.

Embodiments of the invention will now be described, by way of example only, with reference to the following drawings, in which:
Figure 1 is an isometric view of scale disc member mounted according to the present invention on a shaft, with a readhead arranged to read the scale;
Figure 2 is a plan view of the arrangement of Figure 1;
Figure 3 is a side view of the arrangement of Figure 1;
Figure 4 is a plan view of the scale disc member of Figure 1 shown in isolation;
Figure 5 is a detailed view of the region M of the scale disc member of Figure 4;
Figure 6 is a cross-sectional view of the scale disc member mounted on the shaft, taken along line I-I of Figure 2;
Figure 7 schematically illustrates the steps of installing the scale disc member of Figures 1 to 6 in accordance with the present invention;
Figure 8 shows an alternative embodiment of a scale disc member adapted for mounting in accordance with the present invention;
Figure 9 shows a scale disc adjustment tool for adjusting the radial position of the scale disc member of Figure 8;
Figure 10 shows a plan view of the scale disc adjustment tool mounted on top of the scale disc member of Figure 9, which in turn is mounted on a shaft of a machine;
Figure 11 shows a cross-sectional view of the scale disc adjustment tool of Figure 9;
Figure 12 shows a cross-sectional view of the scale disc adjustment tool, scale disc member and shaft of Figure 10, taken along line II-II of Figure 10;
Figure 13 schematically illustrates the steps of installing the scale disc member of Figure 8 using the tool of Figure 9 in accordance with the present invention;
Figures 14 to 22 show an alternative embodiments of a scale disc member adapted for mounting in accordance with the present invention
Figures 23 to 25 schematically illustrate a radial adjustment of a scale disc member according to the present invention via a radial adjustment device which is partially decoupled from the part on which the scale disc member is mounted.

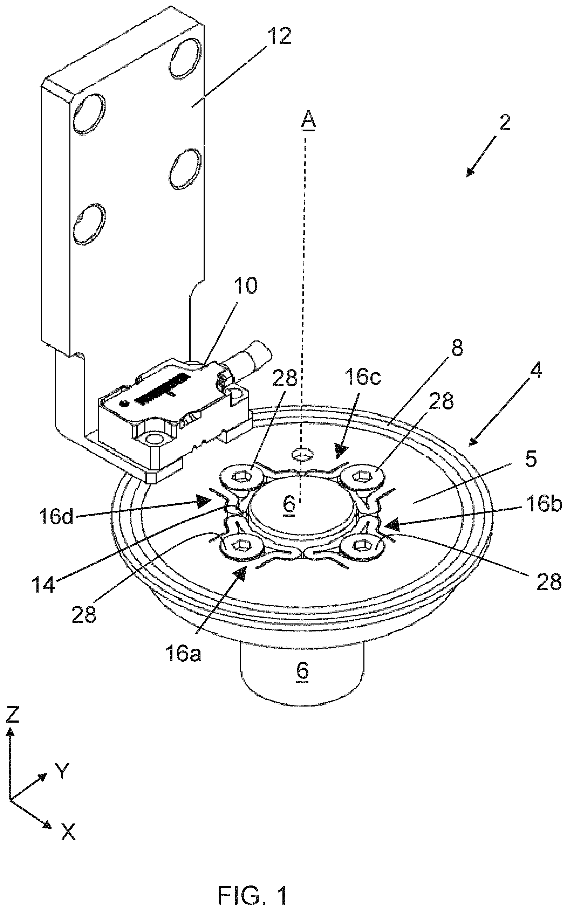

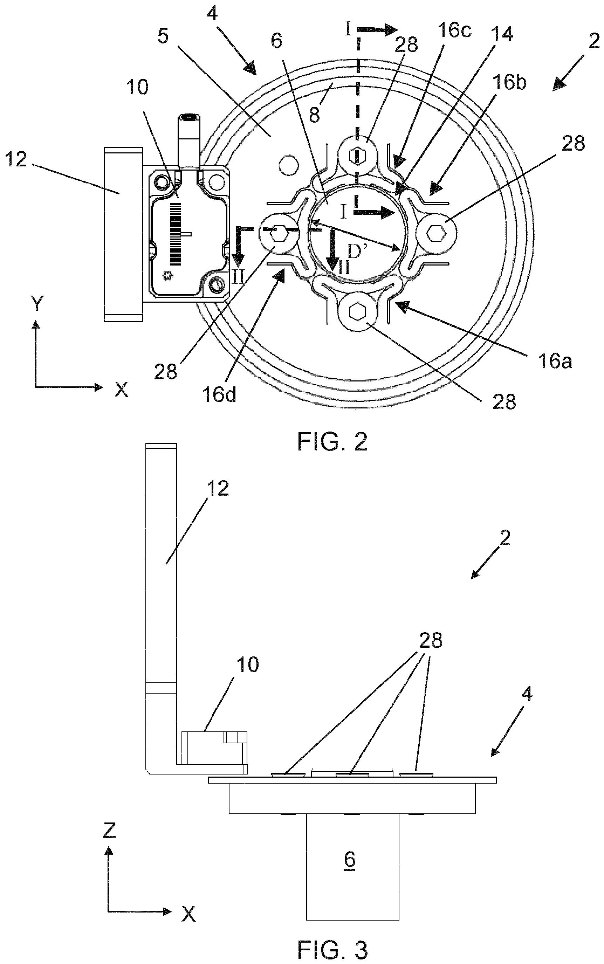

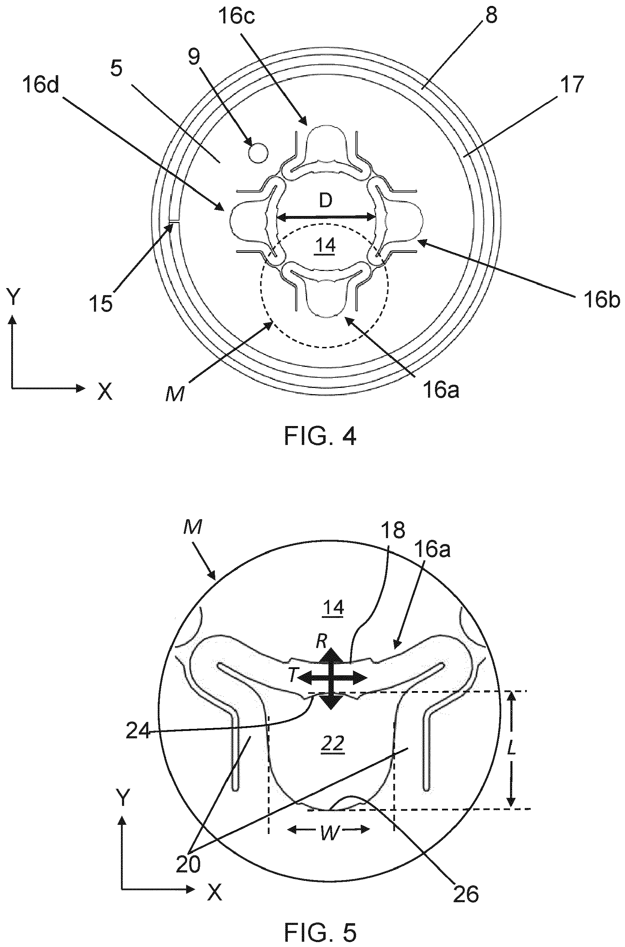

Referring to Figures 1 to 3 and 6, there is shown an encoder apparatus 2 mounted on a machine, i.e. on a rotatable shaft 6 and on a component 12 of the machine (not shown). Figures 1 to 3 (and 6) show the encoder apparatus subsequent to it having been mounted in accordance with the process of the invention which is described in more detail below. Figures 4 and 5 show the scale disc member 4 in isolation.

As shown, in this embodiment, the encoder apparatus comprises a scale disc member 4 which is planar in configuration and mounted on the machine's shaft 6.

The scale disc member 4 comprises a planar annular body 5 on which a scale track 8 is provided on one of its planar faces, and a plurality of flexures 16a, 16b, 16c, 16d configured to engage the shaft 6. In this embodiment, the annular body on which the scale track 8 is provided, and the plurality of flexures 16 are formed from a single piece of material. This can be advantageous, especially for thin planar scale disc, as it can help to ensure the compactness of the scale disc, as well as help to ensure that the flexures 16 are contained within the same plane as the annular body. In particular, the scale disc member 4 (i.e. the annular body and the flexures) is formed from a thin sheet of material, in this embodiment, from stainless steel, which is about 1mm thick. For context, the external diameter of the scale disc member 4 in this embodiment is about 55mm. As will be understood, the invention is not limited to discs of such a size, and such dimensions are given merely as an example of a disc. Also, the disc could be made from other metallic materials, such as aluminium. As will be understood, the disc could be made from non-metallic materials or could comprise two or more separate parts made from different materials (e.g. a glass disc mounted on a metallic hub which comprises the flexures). However, the invention is particularly concerned with single-piece thin planar discs (in particular metallic discs), for which (until the advent of the present invention), there had been significant challenges in being able to mount them on a part and avoid significant eccentricity error.

As shown in Figure 1, the scale track 8 extends completely annularly around the scale disc member 4. Although not shown in detail in Figure 1, the scale track 8 comprises a series of features which a readhead 10 can read to determine the relative position/motion of the scale disc 4 and the readhead 10.

The readhead 10 is mounted on a component 12 of the machine which is fixed such that the cylindrical shaft 6 can rotative relative thereto about an axis A.

In the embodiment described, the encoder apparatus 2 is an optical encoder apparatus, but this need not necessarily be the case. For instance, the encoder apparatus could be a magnetic, inductive or capacitive encoder apparatus. Furthermore, in the embodiment described, the encoder apparatus 2 is a reflective optical encoder apparatus (in that the light from the readhead is reflected by the scale back toward the readhead, and in that the readhead's illumination and scale detection components are on the same side of the scale). However, this need not necessarily be the case, and the encoder apparatus could be a transmissive optical encoder.

In this embodiment, the encoder apparatus 2 is an incremental encoder apparatus. Accordingly, in this embodiment the scale disc 4 is an incremental scale disc and the scale track 8 comprises a series of periodically arranged features which the readhead 10 can read in order to provide a count of the relative position/movement of the scale disc 4 and the readhead 10. As is common in the field of incremental encoder apparatus, the scale disc member 4 could comprise one or more reference marks which can be read by the readhead when it passes the readhead, so that the readhead can identify a reference position on the scale disc member. An example reference mark 15 is shown in Figure 4. In this case, the reference mark 15 is shown in a track 17 separate to the incremental scale track 8, but this need not necessarily be the case. The reference mark 15 could be embedded within the incremental scale track 8. Of course, the encoder apparatus could be an absolute encoder apparatus instead of an incremental encoder apparatus. Accordingly, the scale disc 4 could be an absolute scale disc, in which the scale track(s) thereon comprises features defining a series of unique absolute positions such that the absolute position of the scale disc and readhead can be determined on start-up without requiring relative motion of the scale disc member and the readhead.

As shown most clearly in Figure 4, the scale disc member 4 comprises a hole 14 through its middle, through which the cylindrical shaft 6 extends when the scale disc 4 is mounted on the cylindrical shaft 6. The scale disc member 4 comprises four flexures 16 which are provided in plane with the planar disc and are spaced equiangularly around the hole 14. The flexures 16 are shaped and sized such that the effective diameter D of the hole 14 is slightly smaller than the diameter D' of the disc receiving portion of the shaft 6 onto which it is to be mounted by approximately 20-40µm. The flexures 16 are resiliently compliant in the radial direction (with respect to the scale disc member 4). Accordingly, the flexures 16 could be referred to as "radial spring members". Due to the effective diameter D of the hole 14 being slightly smaller than the diameter D' of the shaft 6 onto which it is to be mounted, the scale disc member 4 has to be force fitted onto the shaft 6. Accordingly, once the scale disc member 4 has been forced onto the shaft 6, there is a natural/default/automatic tight fit between them. This is because the process of force fitting the scale disc member 4 onto the shaft 6 causes the flexures 16 to radially deflect, wherein the elasticity of the material of the flexures 16 causes a reaction force on the shaft 6. This causes them to be biased into the shaft 6 along the radial direction, so as to thereby engage, and radially locate the scale disc 4 on, the shaft 6 (at a predetermined/default radial location).

On the assumption that the four flexures 16 are nominally identical, they should ensure that scale disc member 4 is nominally centred on the shaft 6 - in other words, the action of force fitting the scale disc member 4 on the shaft 6 should cause the scale disc member to "self-centre" on the shaft 6. However, relying on the self-centring ability of the scale disc member might not be sufficient, and it might be advantageous to be able to ever-so-slightly tweak the radial position of the scale disc member so as to achieve an optimised radial location which in turn can optimise the performance of the encoder (in particular so as to reduce eccentricity error).

In the applications and apparatus in which the inventor's discs are likely to be used, it is unlikely that adjustments of greater than 50 µm would ever be required, and it could be that the extent of the adjustment is a small as a couple of microns. It needs to be borne in mind that not only is the extent of adjustment required miniscule, but that the installer also needs to be able to effect such an adjustment in a predictable and consistent manner. Being able to effect such an adjustment in a predictable and consistent manner means that the installer does not need to work on a trial-and-error basis, which is very time consuming and could also result in making the set up worse.

The inventors found that the effects of friction and stiction between the flexures 16 and the shaft 6 are a significant issue when trying to effect such tiny adjustments in a predictable manner. For instance, it is likely that the stiction between the flexure and shaft is not perfectly equal for all flexures. Accordingly, when trying to push or pull the scale disc member in a particular direction, the flexure/shaft interface might give-way/slip at one of the flexures, but not another, causing the whole scale disc member to rotate unpredictably.

To counteract this issue, the inventors invented new scale disc members and new methods of mounting a scale disc member.

For instance, in the example embodiment of Figures 1 to 6, as well as the flexures 16 being radially compliant (e.g. along the direction "*R*" in Figure 5), they are also configured with tangential compliance (e.g. along the direction "*T"* in Figure 5). As explained in more detail below, being both radially and tangentially compliant helps to ensure that the radial position of the annular body 5 can be adjusted in a predictable and consistent manner.

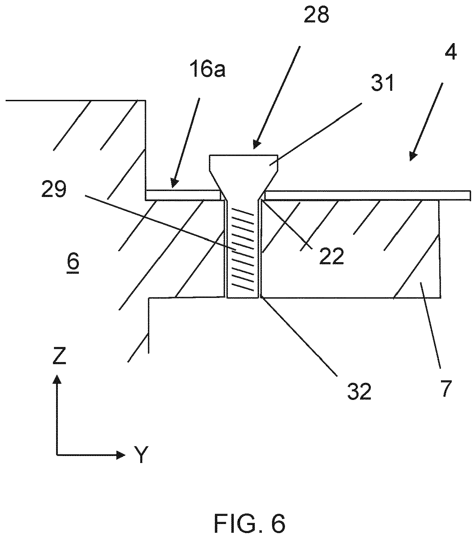

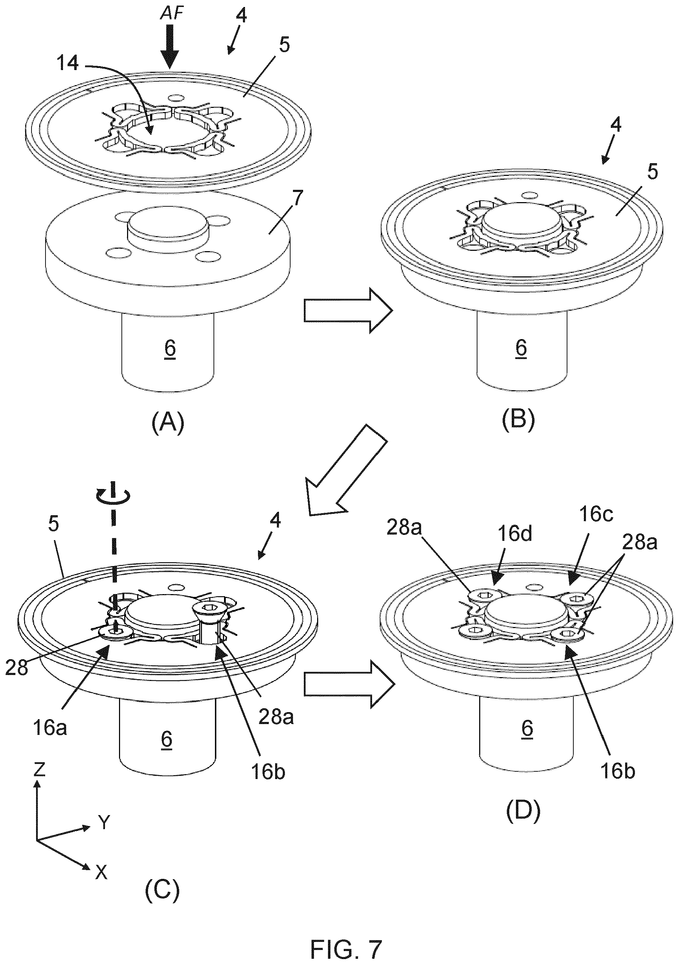

In the currently described embodiment, tangential compliance is achieved by providing a specially shaped flexure. In particular, the flexure 16 comprises a "seat" or "foot" portion 18 which is configured to engage the shaft 6. The foot portion 18 extends between a pair of elongate flexure legs 20, which themselves extend from the annular body 5, into the hole 14. The foot portion 18 and the flexure legs 20 are formed from the same piece of material as the annular body 5, and define a flexure void 22. As shown in Figure 5, a first contact face 24 is provided on the void-side of the flexure foot 18, and a second contact face 26 is provided on opposite side of the void, facing the first contact face 24. As explained in more detail below in connection with Figures 6 and 7, an adjustment bolt 28 can be located through the flexure void 22 such that a tapered head 31 of the adjustment bolt 28 can engage and push against the contact faces 24, 26 so as to adjust their separation distance *L*.

The foot portion 18 is resiliently compliant in the radial direction R, by virtue of it being able to bend along its length, within the plane of the disc, and the foot portion 18 is resiliently compliant in the tangential direction T, by virtue of the pair of flexure legs 20 being able to bend along their length, within the plane of the disc.

The flexures 16, in particular, the flexure foot 18 and elongate legs 20 (and the flexure void 22) can be formed, for instance, by etching and/or machining (e.g. laser cutting) the annular body 5. Optionally, the annular body 5, along with its flexures 16, is formed by a moulding, casting and/or additive process.

A method of mounting the scale disc member 4 of Figures 1 to 6 will now be described with reference to Figure 7. As schematically illustrated in steps (A) and (B) of Figure 7, the method begins by an installer force fitting the scale disc member 4 onto the shaft 6. This involves the user approximately aligning the scale disc member 4 such that it is substantially co-axial with the shaft 6, and then pushing the scale disc member 4 onto the shaft by applying a force *"AF",* substantially along the axial direction, such that the shaft 6 protrudes through the hole 14 in the scale disc member 4. In this embodiment, the installer keeps pushing scale disc member 4 along the shaft 6 until the underside of the scale disc member 4 comes to rest on a ledge 7 on the shaft, as shown in step (B) of Figure 7.

As mentioned above, the inner diameter D of the hole 14 is slightly smaller than the diameter D' of the disc receiving portion of the shaft 6. Accordingly, the scale disc member 4 will not simply loosely fit over and slide down the shaft 6 by itself. Rather, the installer has to force-fit them together such that the flexures 16 deflect from their natural rest position so as to open up the hole 14 to thereby accommodate the shaft, and also so as to overcome the friction between the flexures 16 and the shaft 6 so as to move the scale disc member 4 along the shaft's axis to the desired axial position on the shaft 6.

Once the scale disc member 4 is at the desired axial position on the shaft 6, the installer can check the radial position of the scale disc member 4 at step (B). This could be achieved mechanically, for example using a Dial Test Indicator (DTI) on the outer edge of the disc as it is rotated. Optionally, an optical method could be used. For example a microscope could be used to look at the edge of the scale lines. As another example, a pair of readheads could be configured to read the scale features and the count difference between them can provide a measure of eccentricity. If the radial position is not satisfactory, then the installer can fine tune the radial position of the scale disc member 4 at step (C). This is achieved in this embodiment via the use of one or more adjustment bolts 28. As shown in more detail in Figure 6, the adjustment bolt 28 comprises a threaded portion 29 and a tapered head 31. As shown in Figure 6, the adjustment bolt can be received through the flexure void 22 of a first flexure 16a, such that a threaded portion 29 of the adjustment bolt is received within a threaded hole 32 in the ledge 7 of the shaft 6. As per a normal threaded member, the adjustment bolt 28 can be rotated so as to change its axial position. Figure 6 shows the configuration where the adjustment bolt 28 has been located in the threaded hole 32 and rotated until its axial position is such that the tapered side of the tapered head 31 is just touching the first 24 and second 26 contact faces (described above in connection with Figure 5) of the first flexure 16a. With reference back to Figure 5, it should be noted that the distance L between the first 24 and second 26 contact faces is smaller than the width W of the flexure void, such that it is certain that the tapered head 31 will engage the first 24 and second 26 contact faces and not the insides of the flexure legs 20. Accordingly, as the adjustment bolt 28 is further rotated to cause it to penetrate further into the threaded hole 32, the tapered head 31 will push against first 24 and second 26 contact faces with increasing force, thereby causing the distance L between the first 24 and second 26 contact faces to increase. In view of that the flexure's foot portion 18 is butted up against the shaft 6, the flexure's foot portion 18 is fixed in place and cannot move. Accordingly, any increase in the distance L between the first 24 and second 26 contact faces causes the whole annular body 5 to move (in this example in the Y-dimension).

Such radial motion of the annular body 5 is facilitated in a predictable manner due to the flexing of the other flexures 16b, 16c, 16d. In particular, the flexure foot 18 of the flexure 16c which opposes the first flexure will flex such that the distance L of said flexure 16c will decrease to accommodate the change in radial position of the annular body 4 in the Y-dimension. Also, the other two flexures 16b, 16c will laterally bend/distort (in the Y-dimension) in order to accommodate the change in radial position of the annular body 4 in the Y-dimension (in particular, the flexure legs 20 of the other two flexures 16b, 16c will bend along their length within the plane of the scale disc member). Such flexing of the flexures 16 means that the radial position of the annular body 5 relative to the shaft 6 can be adjusted without needing to overcome the stiction between the shaft 6 and the foot portions 18 of the flexures 16.

When the annular body 5 is in the desired radial position, then as illustrated in step (D) of Figure 7, the adjustment bolt 28 can be left in place so as to hold the annular body 5 in position. Also, in this case, as shown in Figures (C) and (D), it can be advantageous to locate further bolts 28a (which could be identical to the adjustment bolts 28) in the voids 22 of the other flexures (16c, 16d) such that they help to clamp the annular body 5 in place. If so, then it is desired that they are not over tightened because doing so will cause the flexures (16a, 16b, 16c, 16d) to fight one another and/or distort the annular body. Additionally (or alternatively), the radial position of the annular body 5 could be fixed in place by other means, such as adhesive and/or a different mechanical fastener. For instance, one or more supplemental fastener hole(s) 9 (see Figure 4) could be provided on the annular body 5 through which a fastener such as a clamping bolt can be passed and secured to the shaft (e.g. via a hole in the ledge 7), so as to clamp the annular body 5 in place. The bolt(s) 28(a) could then be removed.

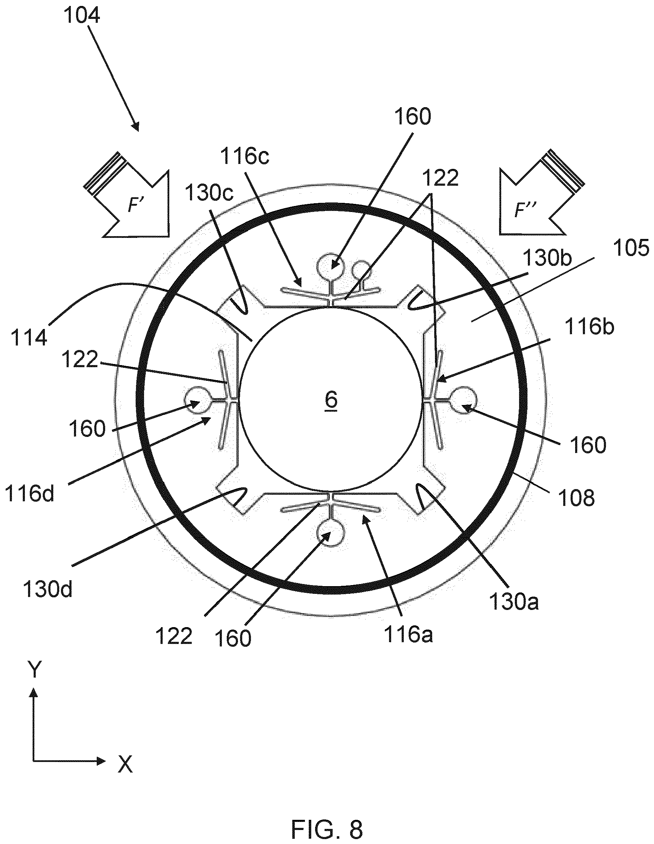

In the above described embodiment, the problems associated with stiction causing unpredictable adjustment of the radial position has been overcome via the use of flexures which are both radially and tangentially compliant. Another embodiment of the invention, which has been found to reduce the stiction problem, will now be described with reference to Figures 8 to 13.

Figure 8 shows an example scale disc member 104 which is similar to that described above in connection with the Figures 1 to 7 in that it comprises a planar annular body 105 on which a scale track 108 is provided on one of its planar faces, and a hole 114 through its middle, through which the cylindrical shaft 6 can extend when the scale disc 104 is mounted on the cylindrical shaft 6. The scale disc member 104 comprises a plurality of flexures 116, but in this embodiment, they do not have any tangential compliance. Rather, the scale disc member 104 comprises four pairs of cantilevered flexures (or "spring members") 116a, 116b, 116c, 116d, which are radially compliant, but not tangentially compliant. Each pair of cantilevered spring members 116a, 116b, 116c, 116d is provided in plane with the planar scale disc 104 and spaced around the edge of the hole 114. Also, each pair of cantilevered spring members 116a, 116b, 116c, 116d is configured such that their free ends are proximal each other and their fixed ends are distal each other. In other words, the cantilevered spring members in each pair 116a, 116b, 116c, 116d point toward each other, rather than away from each other.

As shown in Figure 8, each cantilevered spring member 116 is tapered such that it narrows towards its free end. Accordingly, the width of a cantilevered spring member is greater at its fixed end than its width at its free end. As will be understood, the exact desired dimensions of the cantilevered spring member will depend on a number of factors including the material, size of the disc, and the desired spring force. Our inventors have found a good desired spring force of each flexure in a pair can be about 20 Newtons, which provides a good balance between providing sufficient self-locating ability and not over gripping the shaft.

In the embodiment described, each cantilevered spring member 116 is formed by creating, in the same piece/sheet of material as the annular body 104, a slot 122 (which sits behind the cantilevered spring members 116) and a gap (which sits between the free ends of the cantilevered spring members). The slot 122 and gap enable the cantilevered spring members to flex along their length, into the slot 122. Such a slot 122 and gap can be formed, for instance, by etching and/or machining (e.g. laser cutting) the annular body 105. Optionally, the annular body 105, along with its cantilevered spring members, is formed by a moulding, casting and/or additive process.

When the scale disc member 104 is push-fit onto a shaft 6 (which is slightly larger than the space between the pairs of the cantilevered spring members 116a, 116b, 116c, 116d), the shaft 6 engages the side of each of the cantilevered spring members 116 facing the middle of the hole 114, and causes each of them to bend slightly into the slot 122. The elasticity of the material of the cantilevered spring members 116 causes a reaction force on the shaft 6. Preferably, the reaction force provided by each cantilevered spring member 116 is nominally the same, such that the annular body 105 substantially self-centres on the shaft 6. Such nominally identical reaction forces can be achieved by configuring the cantilevered spring members 116 such that they are nominally identical in shape and size.

Further details of such flexures, including further details on the advantages of providing pairs of cantilevered flexures is described in co-pending UK patent application GB1918002.5.

Similar to the embodiment of Figures 1 to 7, relying on the self-centring ability of the scale disc member might not be sufficient, and it might be advantageous to be able to ever-so-slightly tweak the radial position of the scale disc member so as to achieve an optimised radial location which in turn can optimise the performance of the encoder (in particular so as to reduce eccentricity error).

As mentioned above, the inventors found it incredibly difficult to adjust the radial position of such a scale disc member by such a small amount in a reliable and predictable way without tangentially compliant flexures. However, what they found was that the level of control (in particular the predictability) of the adjustment of the radial position varied significantly depending on the relationship between the radial adjustment force applied to the scale and the flexures. In particular, it has been identified by the inventors that in cases where the shaft must slide against a flexure in order to adjust the radial position, it is uncertain exactly how and when it will start to move.

The inventors found that with a scale disc member which has flexure(s) with no tangential compliance more deterministic, precise radial adjustment can be achieved by ensuring that the radial adjustment force is applied at an angle to such flexures (in other words, by ensuring that the radial adjustment force is not applied tangentially or parallel to the interface of the shaft and any such flexures, or, for instance, by ensuring that the radial adjustment force is not applied perpendicularly to the direction of the flexure force).

In particular, it has been found that it can be preferable to apply the radial adjustment force (or displacement) to the scale disc member, such that, for each of the annularly spaced mounting flexures (or pairs of mounting flexures), the angle between the direction along which the force (or displacement) is applied and a line extending perpendicular to the radial reaction force of the annularly spaced mounting flexure (or pairs of mounting flexures), is greater than the inverse tan of the coefficient of friction between the flexure and the part (e.g. shaft/hub) (e.g. of the articulated joint).

For instance, in the embodiment of Figure 8, if we imagine a situation in which the installer wants to adjust the radial position of the annular body 105 to a new position in the Y-dimension, the logical step for the installer would be apply a force *F* parallel along Y dimension direction. However, it has been found that it more deterministic and precise adjustment can be achieved by applying a first force *F*' which adjusts the radial position in both the X and Y dimensions, and then applying a second force *F*" which further adjusts the radial position of the annular body 105 in the Y dimension, and brings the radial position of the annular body back to its original position in the X dimension. As shown, the directions of the first *F*' and second *F*" forces are at an angle to the tangentially stiff flexures (and are not perpendicular to the flexure/radial reaction force).

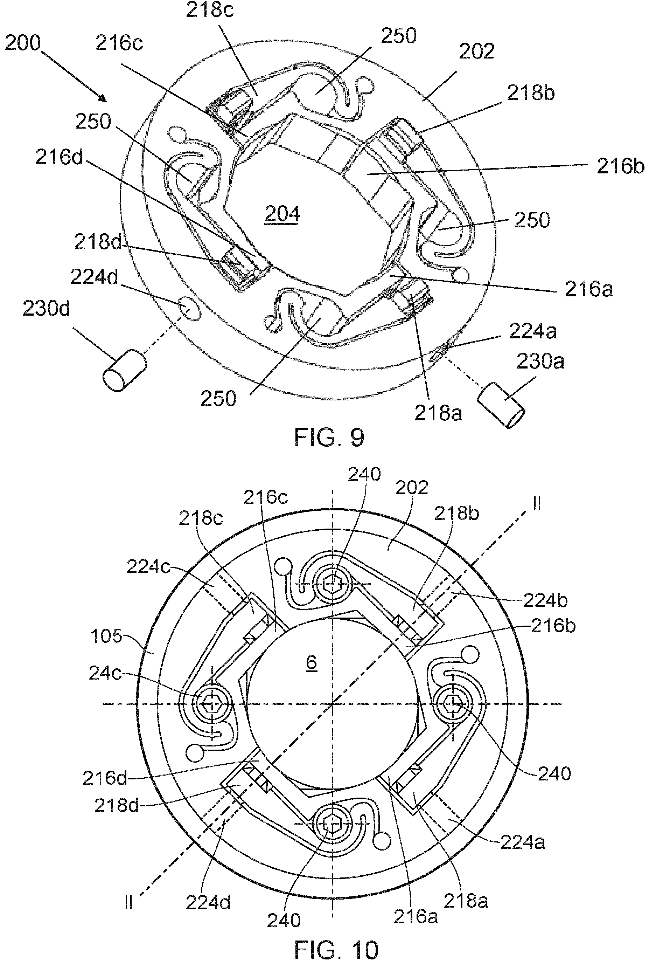

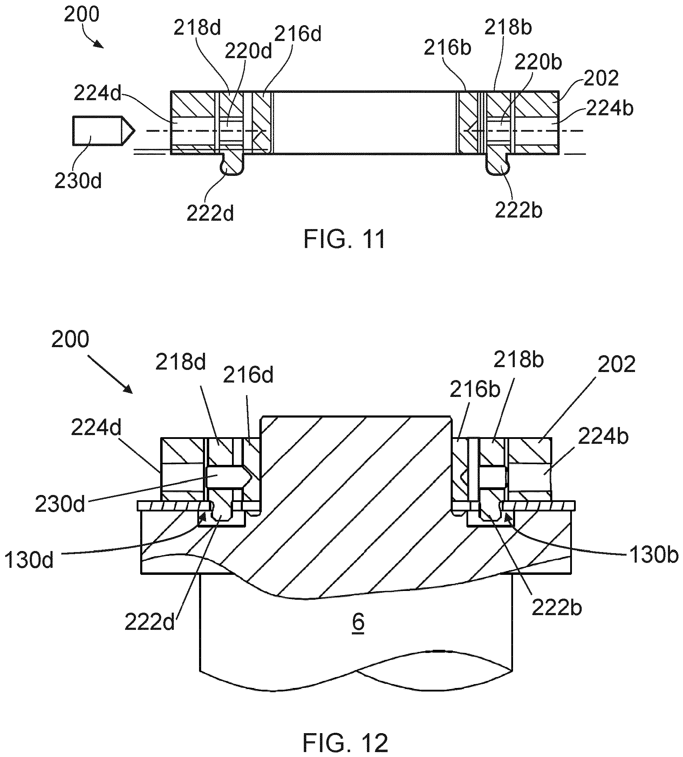

Figures 9 to 12 illustrate an example jig member 200 which can be used to ensure that the radial position of the scale disc member 104 of Figure 8 is adjusted by forces/displacements which are applied at an angle to the flexures in accordance with the above described principle. The jig 200 comprises a ring-shaped body 202 which is configured to sit temporarily on top of the scale disc member 104 after the scale disc member 104 has been force-fitted onto the shaft 6 and removed once the adjustment of the radial position of scale disc member 104 is complete. In this embodiment, the ring-shaped body 202 comprises a hole 204 for receiving the shaft 6. The diameter of the hole is 204 configured to be slightly smaller than the shaft 6 such that it is a snug fit thereon. In particular, the jig 200 comprises four flexure arms 216a, 216b, 216c, 216d, the free ends of which are configured to engage the shaft 6 and radially resiliently deflect when the tool is mounted onto the shaft 6. The jig 200 also comprises a plurality of flexible adjustment arms 218a, 218b, 218c, 218d. In this embodiment there is one flexible adjustment arm associated with each flexure arm. Each adjustment arm 218 comprises a threaded channel 220 extending therethrough, and a lug 222 protruding from its underside (e.g. see Figure 11). Also, channels 224a, 224b, 224c, 224d are provided in the jig's body 202, co-axial with each adjustment arm channel 220. This facilitates the insertion of a grub screw 230 therethrough, the thread of which can engage the thread on the adjustment arm's channel 220. When the end of the grub screw 230 engages the flexure arm 216 (which is butted up against the rigid shaft 6), the flexible adjustment arm 220 will be pushed radially outward as the grub screw 230 is tightened, into the small gap between the flexible adjustment arm 220 and the annular body 202 of the jig 200.

As illustrated in Figure 8, the scale disc member 104 comprises four lug-receiving features 130a, 130b, 130c, 130d. In this embodiment, each lug receiving feature 130 comprises a flat face on the inside edge of the hole 114 of the scale disc member's annular body 105. When assembled together, the lugs 222 are received within the hole 114 of the scale disc member, wherein each lug 222, sits adjacent a corresponding lug receiving feature (e.g. see Figure 12 which shows the lugs 222b, 222d sitting adjacent to the corresponding lug receiving features 130b, 130d).

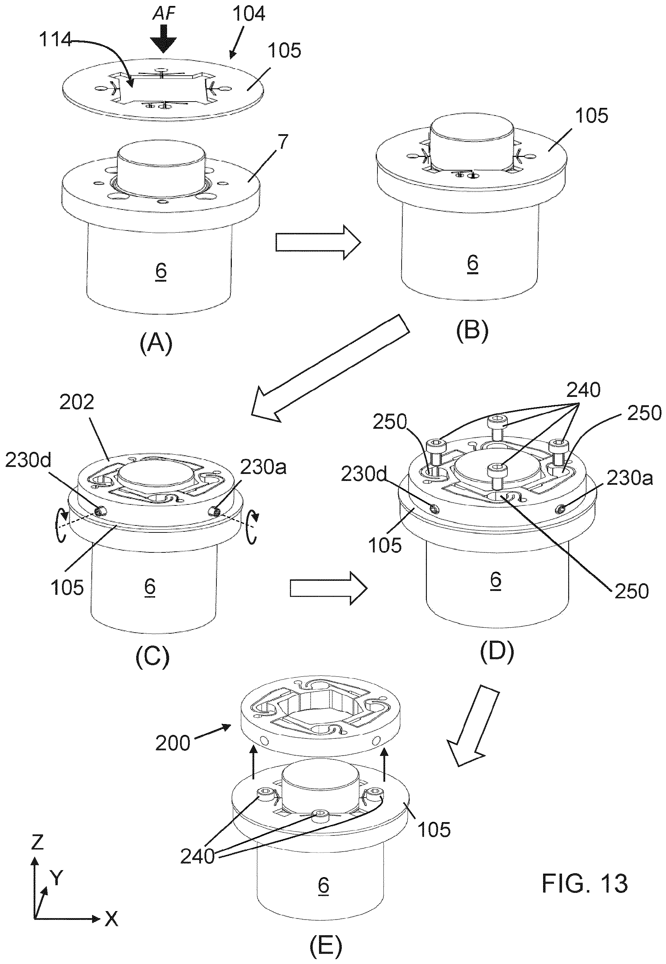

A method of mounting the scale disc member 104 and adjusting its radial position will now be described with reference to Figure 13. As illustrated in steps (A) and (B) of Figure 13, the method begins by an installer force-fitting the scale disc member 104 onto the shaft 6. This comprises the user approximately aligning the scale disc member 104 such that it is substantially co-axial with the shaft 6, and then pushing the scale disc member 104 onto the shaft by applying a force *AF,* substantially along the axial direction, such that the shaft 6 protrudes through the hole 114 in the scale disc member 104. In this embodiment, the installer keeps pushing scale disc member 104 along the shaft 6 until the underside of the scale disc member 104 comes to rest on a ledge 7 on the shaft, as shown in step (B) of Figure 7.

As mentioned above, the inner diameter of the hole 114 is slightly smaller than the diameter of the disc receiving portion of the shaft 6. Accordingly, the scale disc member 104 will not simply loosely fit over and slide down the shaft 6 by itself. Rather, the installer has to force-fit them together such that the flexures 116 deflect from their natural rest position so as to open up the hole 114 to thereby accommodate the shaft, and also so as to overcome the friction between the flexures 116 and the shaft 6 so as to move the scale disc member 104 along the shaft's axis to the desired axial position on the shaft 6.

Once the scale disc member 104 is at the desired axial position on the shaft 6, the installer can check the radial position of the scale disc member 104 at step (B), e.g. via by using a DTI on the outer edge of the disc as it is rotated. If the radial position is not satisfactory, then the installer can fine tune the radial position of the scale disc member 104 at step (C).

At step (C), the installer can push the precision adjustment tool 200 onto the shaft 6, and down along the shaft 6 until the lugs 222 become adjacent corresponding lug receiving features 130. In the described embodiment, the jig sits on/contacts the scale disc member 104 but this need not necessarily be the case. To adjust the radial position of the annular body 105 of the scale disc member 104 (e.g. along the direction illustrated by force arrow *F*" in Figure 8), a grub screw 230 (e.g. grub screw 230d) can be inserted through an appropriate channel 224 (e.g. channel 224d - see Figures 11) until its thread engages the thread of the threaded channel 220 of the corresponding flexible adjustment arm (e.g. threaded channel 220d of flexible adjustment arm 218d - see Figures 11 and 12). At this point, the grub screw 230 can be rotated so as to cause the grub screw (e.g. 230d) to progress axially through the channel (e.g. 220d) of the flexible adjustment arm until its end comes into engagement with the corresponding flexure arm 216 (e.g. flexure arm 216d). At this point, any further rotation of the grub screw (e.g. 230d) will cause the flexible adjustment arm (e.g. 218d) to be forced radially outwards/backwards. As this happens, the corresponding lug 222 (e.g. lug 222d) will engage the corresponding lug receiving feature (e.g. lug receiving feature 130d) on the scale disc member's body 105, and will thereby apply a force thereto, in a direction parallel to the grub screw's and channel's axis (e.g. in this case, along the direction of the arrow *F*" shown in Figure 8). If desired, the installer can use another grub screw to further adjust the radial position of the scale disc member's body 105. For instance, as illustrated in step (C), a second grub screw 230a can be used to pull the annular body 105 in the direction of arrow *F*' shown in Figure 8.

Once the installer is happy with the radial position of the annular body 105, they can secure the annular body in place. As illustrated in step (D), in this embodiment, this is achieved via the use of one or more bolts 240 which can be passed though bolt holes 250 in the tool 200 such that the annular body 105 can be secured with the tool 200 still in place. As per a standard bolt, the bolts 240 can have a threaded portion and a head portion. The threaded portion passes through the bolt holes 250 in the tool 200 and the bolt holes 160 in the annular body 105 so as to engage threaded holes (not shown) in the ledge 7 of the shaft 6, and the underside of the head portion engages the upper face of the annular body 105 of the scale disc member so as to clamp the annular body 105 to the ledge 7.

Once secured, the grub screws 240 can be removed, and then, as illustrated in step (E), tool 200 can be lifted off the shaft 6. As shown, the radial position of the annular body 105 is held in place by the bolts 240. As will be understood, alternative ways of holding the annular body in place are available, such as via an adhesive, in which case the tool 200 will stay in place until the adhesive has cured.

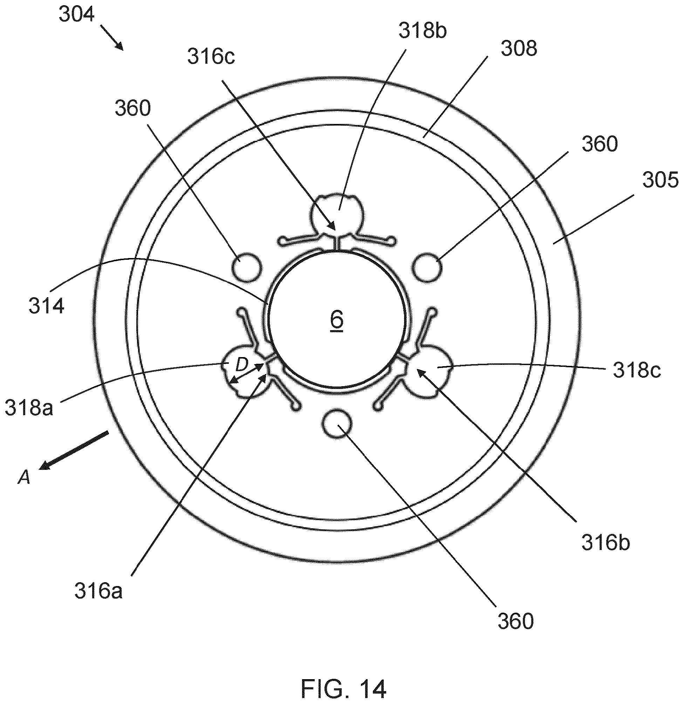

Figure 14 illustrates an alternative adjustable scale disc member 304 which is configured to ensure that its radial position is adjustable by forces which are applied at an angle to the flexures in accordance with the above described principle. Similar to the other embodiments described above, the scale disc member 304 comprises a round, planar, annular body 305 on which a scale track 308 is provided on one of its planar faces, and a hole 314 through its middle, through which the cylindrical shaft 6 can extend when the scale disc 304 is mounted on the cylindrical shaft 6. The scale disc member 304 comprises three pairs of flexures (or "spring member") 316, but in this embodiment, they do not have any tangential compliance. Rather, the scale disc member 304 comprises three pairs of cantilevered spring members 316a, 316b, 316c which are radially compliant, but not tangentially compliant. As shown, the cantilevered spring members 316a, 316b, 316c extend in a substantially "tangential" or "circumferential" direction relative to the disc (e.g. as opposed to substantially radially). Each pair of cantilevered spring members 316a, 316b, 316c is provided in plane with the planar scale disc 304 and spaced equidistantly around the edge of the hole 314. Also, each pair of cantilevered spring members 316a, 316b, 316c is configured such that their free ends are proximal each other and their fixed ends are distal each other. In other words, the cantilevered spring members in each pair 316a, 316b, 316c point toward each other, rather than away from each other. A flexure void 318a, 318b, 318c is provided directly behind each pair of cantilevered spring members 316a, 316b, 316c.

Similar to the other above described embodiments, the flexure pairs 316 are shaped and sized such that the effective diameter of the hole 314 is slightly smaller than the diameter of the disc receiving portion of the shaft 6 onto which it is to be mounted. Accordingly, the scale disc member 304 has to be force-fitted onto the shaft 6. Once the scale disc member 304 has been force-fitted onto the shaft 6, there is a natural/default/automatic tight fit between them.

Similar to embodiment of Figures 1 to 6, the flexure voids 318 are configured to receive an adjustment bolt 28 (having a threaded portion 29 and a tapered head 31) . After the scale disc 304 has been force fitted onto the shaft an adjustment bolt 28 can be used in the same way as that described above in connection with Figure 6 to effect an increase in the distance between the back of a flexure pair 316 and the back wall of its flexure void 318 (e.g. distance "D" shown in Figure 14). For example, using an adjustment bolt 28 in the flexure void 318a of the first flexure pair 316a of Figure 14a will cause the radial position of the annular body 305 to shift along the arrow A in Figure 14. Such a shifting is facilitated by the radial deflection of the other two pairs of cantilevered spring members 316b, 316c. However, like the embodiment of Figures 8 to 13, the cantilevered spring members 316a, 316b, 316c are not tangentially compliant. Accordingly, it will be necessary to overcome an element of stiction between the other two pairs of cantilevered spring members 316b, 316c and the shaft 6. To reduce the effect of above described problem of stiction causing unpredictable radial adjustment, the scale disc 304 is configured to ensure that the radial adjustment force applied by an adjustment bolt 28 will be applied at an angle to the flexures (in other words, is configured to ensure that the radial adjustment force will not be applied tangentially or parallel to the interface of the shaft and any such flexures).

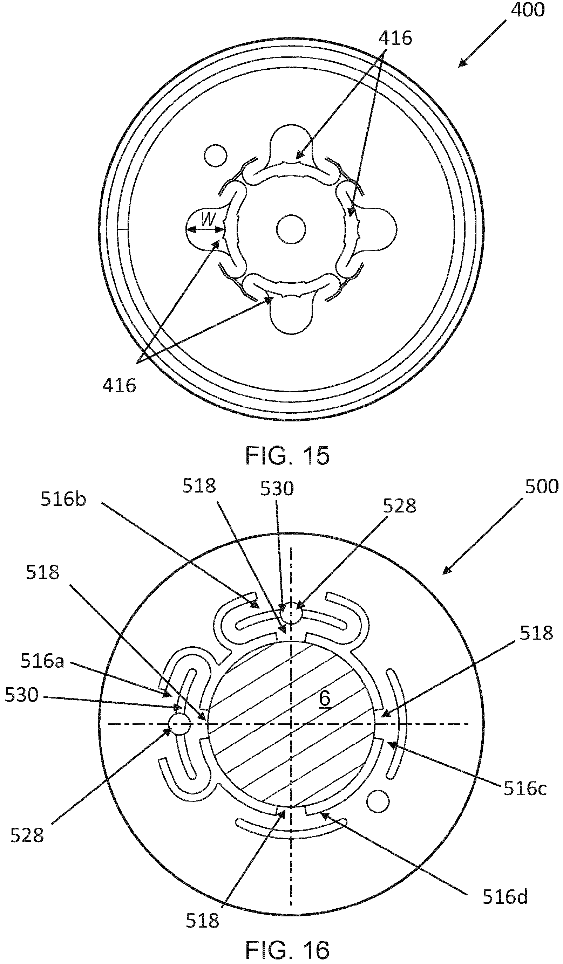

Further alternative adjustable scale disc members are also illustrated in Figures 15 to 22 and briefly described below.

The adjustable scale disc member 400 of Figure 15 is similar to that of the embodiment of Figures 1 to 7, except that the flexures 416 are configured without any tangential compliance. Whilst this design does not have the benefit of tangential compliance, it is simpler in design than that of Figures 1 to 7. It has also been found that this design can be beneficial over the design of Figure 14, especially for designs in which the disc is smaller, and/or the flexures are closer together, because the flexures are more isolated from each other. Similar to the embodiments of Figures 1 to 7 and 14 to 19, adjustment of the flexures can be effected by use of a radial adjustment device (not shown) (such as a screw with a tapered head) which can be inserted in the flexure void and tightened so as to expand the flexure (i.e. so as to increase the width "w" of the flexure void) and thereby laterally displacing the disc.

The adjustable scale disc member 500 of Figure 16 comprises four flexures, 516a, 516b, 516c and 516d, only two of which 516a and 516b are configured to be directly adjustable. As per the other designs, the flexure defines a default inner periphery diameter which is smaller than the diameter of the part 6 on which it is to be mounted. Also, similar to the embodiments of Figures 1 to 7 and 14 to 19, adjustment of the flexures can be effected by use of an adjustment device 528 (such as a screw with a tapered head) which can be inserted in the flexure void 530 and tightened so as to expand the flexure.

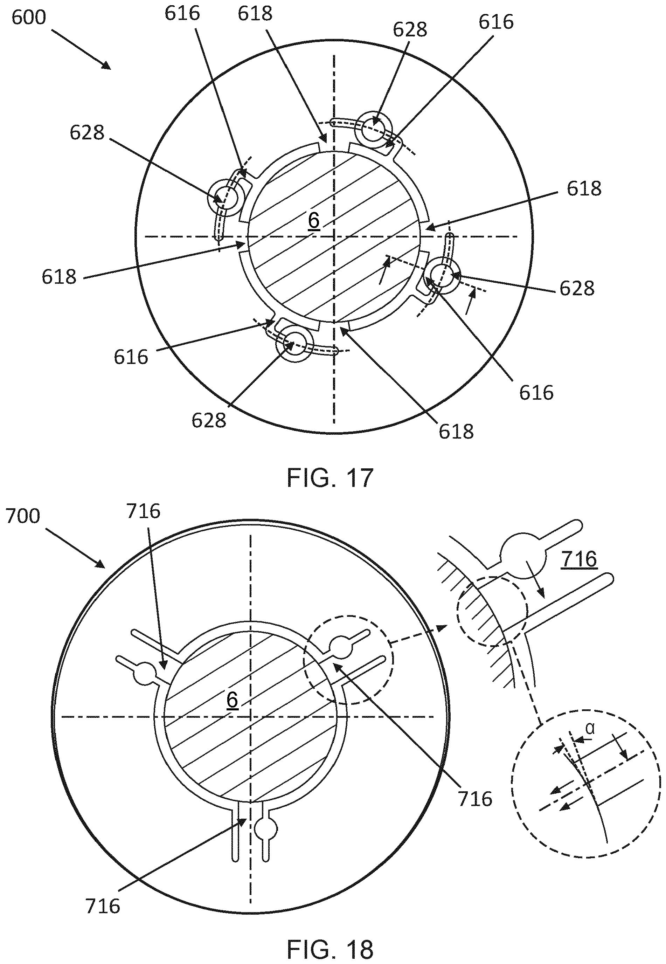

The adjustable scale disc member 600 of Figure 17 comprises four, tangentially/circumferentially extending, cantilevered flexures 616. The cantilevered flexures 616 each have a foot portion 618 configured to engage the part/shaft inserted in the hole through the disc, and which define a default inner periphery diameter which is smaller than the diameter of the part 6 on which it is to be mounted. In this embodiment, the radial adjustment devices 628 are configured to act at a tangentially/circumferentially distant point from the foot portion 618. In other words, the radial adjustment devices 628 are configured such that they do not sit directly radially behind the foot portion, but rather at a point further from the root of the cantilevered flexure than its foot portion 618. This helps to provide a lever-ratio effect which can help to provide even more precise control over the adjustment force applied to the disc. Accordingly, such a configuration can provide a smaller than 1-to-1 relationship between i) the effect the manually manipulable radial adjustment devices 628 has on the extent of displacement of the adjustment flexure 618 in said plane at their point of interaction in the plane perpendicular to the axis of rotation; and ii) the extent of the resulting radial displacement the adjustment flexure has on the annular body of the rotary scale member.

A similar lever-ratio effect can be achieved via other designs, such as that shown in Figure 18, in which the adjustable scale disc member 700 of Figure 18 comprises three radially extending cantilevered flexures 716, the free ends of which engage the part/shaft 6 inserted through the hole in the disc. In this design, the tightening of adjustment screws which have tapered heads causes the radially extending cantilevered flexures 716 to deflect sideways (e.g. substantially tangentially). The end faces of the free ends of the radially extending cantilevered flexures 716 have a slight angle to them such that when the flexure is pushed sideways, it effects a lateral displacement of the disc (with the other flexures flexing in response thereto). As will be understood, the extent by which the disc is laterally displaced by any given unit of sideways displacement of the flexure will depend on the angle of the end face of the radially extending cantilevered flexures 716. Accordingly, the angle of the end face of the radially extending cantilevered flexures 716 can be selected at the design and manufacturing stage to provide the desired lever-ratio effect.

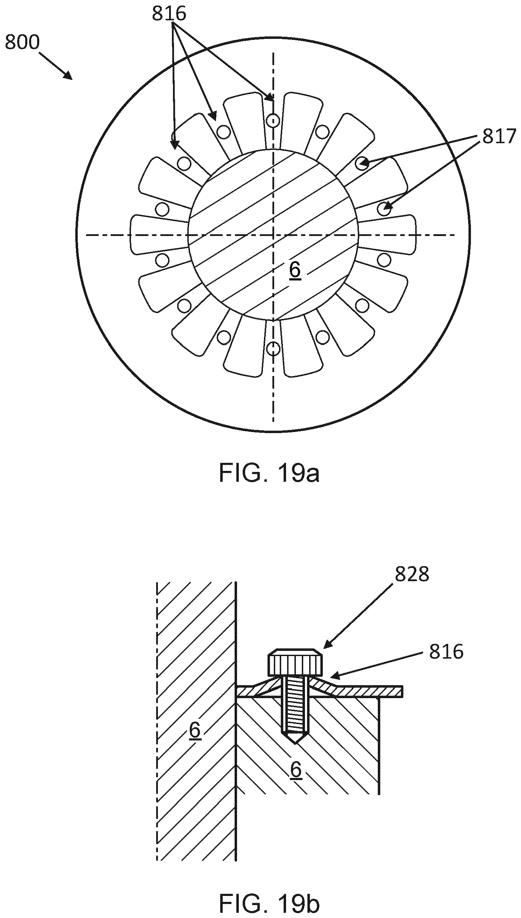

The adjustable scale disc member 800 of Figures 19a and 19b comprises a plurality of radially extending cantilevered flexures 816, each which has a naturally bent shape and a hole 817 therethrough for receiving an adjustment screw 828 (see Figure 19b). The free ends of the radially extending flexures defines a default inner periphery diameter which is smaller than the diameter of the part 6 on which it is to be mounted. Accordingly, when the disc member 800 is force fitted onto the part 6, they deflect and radially self-locate the disc member onto the part. As illustrated in Figure 19b, the lateral position of the disc could be changed by the use of an adjustment screw 828 so as to change the extent of the bend in the flexure 816, thereby controlling the lateral position of the disc.

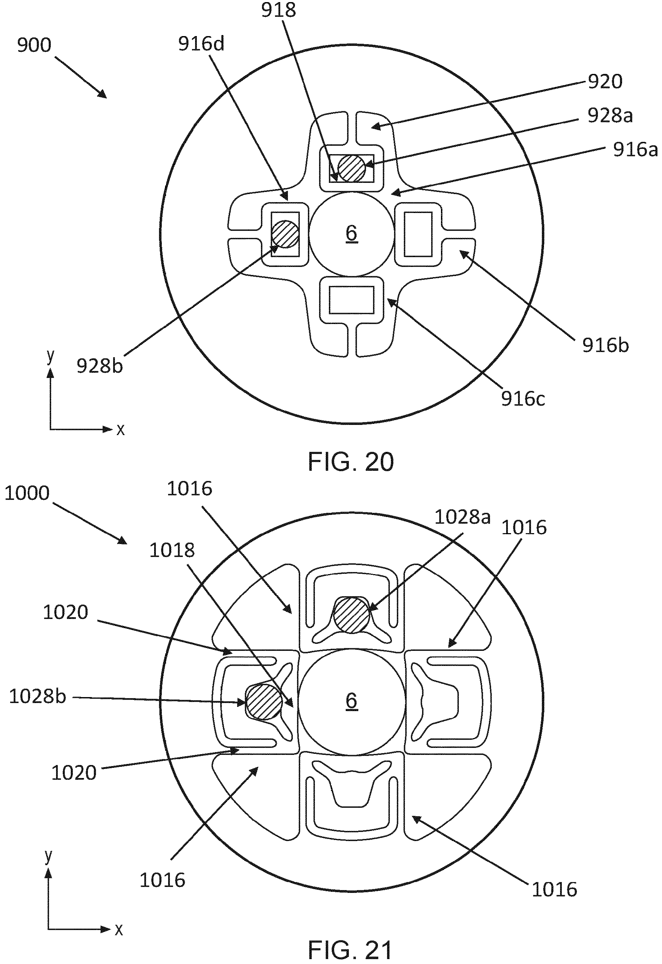

The adjustable scale disc member 900 of Figure 20 comprises four flexures 916 which define a default inner periphery diameter which is smaller than the diameter of the part 6 on which it is to be mounted. Similar to the embodiment of Figures 1 to 7, the flexures 916 are configured with both radial and tangential compliance. However, in this embodiment (and in the embodiment of Figure 21 described below), the tangential compliance is provided in a way which is isolated/independent from the radial adjustment device 928. In particular, in the embodiment of Figure 1 to 7, there is a concern that once a radial adjustment device 28 has been located in one of the flexure voids 22, the radial adjustment device 28 will affect the performance of radial adjustment of the disc in another direction. For example, the embodiment of Figure 1 to 7 above was described in connection with adjusting the radial position of the disc in the Y-dimension. If further adjustment of the radial position was desired in the X-dimension then a second adjustment screw would be needed to be inserted in flexure void of either the second 16b or fourth 16d flexure and tightened as appropriate in order to effect a change in radial position in the X-dimension. However, there is a concern that the presence of the adjustment screw located in the flexure void 22 of the first flexure 16b might interfere with the radial adjustment, and in particular might impact the ability of the first flexure 16a to flex tangentially.

In the embodiment of Figure 20 the radial compliance of a flexure 916 is provided by an elongate seat portion 918 of the flexure and the tangential compliance is provided by a leg portion 920. The tangential compliance of the leg portion 920 is not affected by the presence of the adjustment screw 928. Accordingly, a first adjustment screw 928a can be used in the flexure void of a first flexure 916a to effect a radial adjustment in Y-dimension (which will cause the flexure void of the first flexure 916a to expand, the flexure void of the third flexure 916c directly opposite the first flexure 916a to contract, and cause the leg portions 920 of the second 916b and fourth 916d flexures to bend along their length). A second adjustment screw 928b can subsequently be used in the flexure void of the fourth flexure 916d to effect a radial adjustment in X-dimension (which will cause the flexure void of the fourth flexure 916d to expand, the flexure void of the second flexure 916b directly opposite the fourth flexure 916d to contract, and cause the leg portions 920 of the first 916a and third 916c flexures to bend along their length).

Similar to the embodiment of Figure 20, the flexures 1016 of the adjustable scale disc member 1000 of Figure 21, are also configured in a way such that they provide both radial and tangential compliance, and wherein the tangential compliance is not affected by the presence of a radial adjustment device 928 which is used to control another one of the flexures. In particular, the radial compliance in provided by the elongate seat portion an elongate seat portion 1018 of the flexure 1016 and the tangential compliance is provided by a pair of legs 1020 which can bend along their length.

Accordingly, in the embodiments of Figure 20 and 21, the flexure comprises a radial adjustment flexure member comprising (e.g. front and back) sides against which a radial adjustment device can engage and push so as to effect a radial adjustment of the disc, wherein the radial adjustment flexure member is connected to the main body of the disc member by at least one tangentially compliant support (e.g. leg).

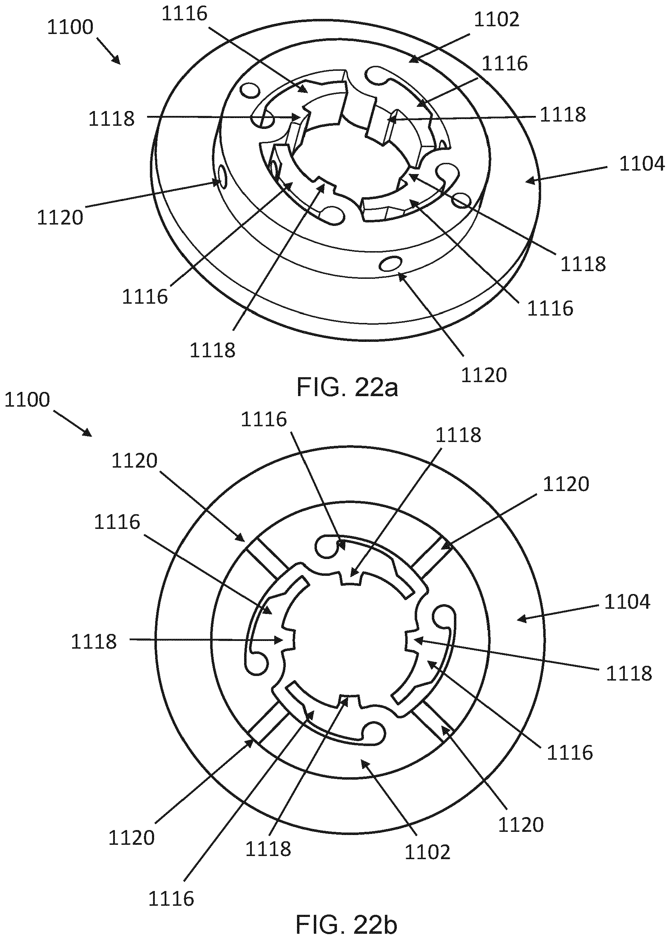

Figure 22 illustrates an alternative adjustable scale disc member 1100. This disc member 1100 differs substantially from the other disc members described above in that it is not a planar disc made from sheet material. Rather, the disc member comprise a hub 1102 which protrudes from the face 1104 of the disc member on which the scale features (not shown) are provided. In this case, the hub comprises four tangentially/circumferentially extending cantilevered flexures 1116, each having a foot portion 1118 which define a default inner periphery diameter (which is intended to be smaller than the diameter of a part/shaft on which it is to be mounted). Once mounted on a shaft extending through the hole defined by the feet portions 1118, the radial position of the face 1104 of the disc member can be adjusted by one or more radial adjustment devices (not shown) (for example grub screws) which can pass through holes 1120 in the hub so as to push against the free end of the cantilevered flexures 1116. Similar to the embodiment of Figure 17, the point at which the radial adjustment device engages and pushes against the cantilevered flexure 1116 is tangentially/circumferentially distant from the foot portion 618. In other words, the radial adjustment devices will not engage the cantilevered flexure 1116 at a point directly radially behind the foot portion, but rather at a point further from the root of the cantilevered flexure than its foot portion 1118. This helps to provide a lever-ratio effect which can help to provide even more precise control over the adjustment force applied to the disc.

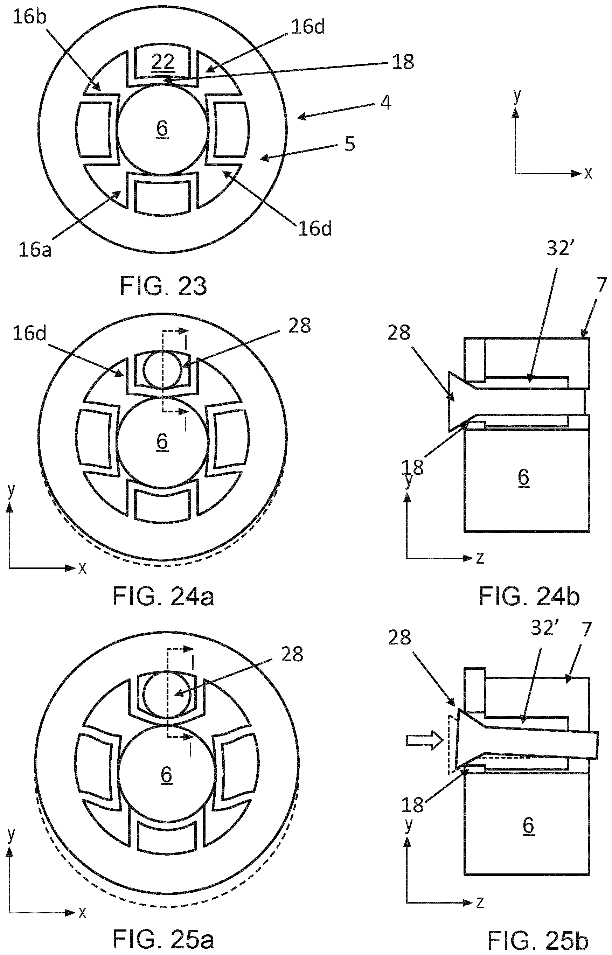

It has been found that the performance of all of the embodiments of Figures 1 to 7 and 14 to 21 can be significantly improved by use of a radial adjustment device which at least partially decouples the radial adjustment device from the part on which the disc is installed, at least in the radial direction with respect to the scale disc member, so as to avoid/reduce the radial adjustment device fighting the change in radial location of the main body of the disc. In particular, the "extent" or "range" by which the radial position of a disc can be adjusted whilst minimising the distortion of the part of the disc on which the scale is provided (e.g. the "main body" or "annular body" of the disc) can be increased by using radial adjustment devices which are at least partially decoupled from the part on which the disc is installed, at least in the radial direction. This will be explained in more detail with reference to Figures 23 to 25. Figure 23 is a schematic plan drawing of the scale disc member 4 of Figures 1 to 7, mounted on a shaft 6. In Figure 23, the scale disc member 4 is in it default radial location, which is controlled by the radial deflection of the flexures 16a, 16b, 16c and 16d which was caused by the force fitting of the scale disc member 4 onto the shaft 6.

Figure 24a shows a schematic plan drawing of the same scale disc member 4, after an adjustment bolt 28 (as per Figure 6) has been inserted into the flexure void 22 of the fourth flexure 16d and tightened such that its tapered head engages front and back contact faces of the void 22 of the flexure 16d (and as described in more detail above in connection with Figures 5 and 6). As the adjustment bolt 28 is further rotated to cause it to penetrate further into the threaded hole 32, the tapered head 31 will push against front and back contact faces of the void 22 of the flexure 16d (as schematically illustrated in Figure 24b) with increasing force, thereby causing the distance between them to increase. In view of that the flexure's 16d foot portion 18 is butted up against the shaft 6, the flexure's foot portion 18 is fixed in place and cannot move. Accordingly, any increase in the distance between the front and back contact faces of the void 22 of the flexure 16d causes the whole annular body 5 to move (in this example in the Y-dimension) as illustrated in Figure 24a (with the dotted line illustrating the annular body's 5 initial/default location).

As illustrated in Figure 24b (and Figure 25b), similar to the embodiment of Figure 6, the adjustment bolt 28 is received within a hole 32' in the ledge 7 of the shaft 6. However, in contrast to the embodiment of Figure 6, the thread of the adjustment bolt 28 engages a threaded portion of the hole 32' only at its end distal the tapered head (as opposed to substantially along its entire length). As illustrated in Figure 25b, this means that the adjustment bolt 28 is able to tilt (in other words "pivot" or "cant") and/or bend along its length (the dotted line in Figure 25b illustrating the non-titled arrangement of the adjustment bolt 28). In other words, such a configuration means that the adjustment bolt 28 is more "wobbly", or has more "play" at its tapered head end compared to the configuration shown in Figure 6. In particular, in the embodiment described, the tapered head of the adjustment bolt 28 is free to move by up to +/- 200µm from its default/central position. As will be understood, there is little or no axial "play", but rather only radial "play". Accordingly, in the embodiment of Figures 23 to 25 the radial position of the tapered head of the adjustment bolt (with respect to the scale disc member 4) is decoupled from the shaft 6 and ledge 7. This means that the adjustment bolt can tilt with respect to the shaft 6 and ledge 7, thereby enabling its tapered head portion to follow the change in the radial location of the centre point of the flexure void 22 as length "L" of the flexure 16 (see Figure 5) is increased. (The radial location of the centre point of the flexure void 22 changes as length "L" of the flexure 16 is increased because the radial position of the foot portion 18 is fixed due to being pressed against the fixed shaft 6).

This has been found to be advantageous because it means that increased radial adjustment of the annular body 5 can be achieved. For instance, as shown in Figure 25a and 25b, further axial driving of the adjustment bolt 28 will pull the tapered head of the adjustment bolt into the flexure void 22 of the fourth adjustment flexure 16d. If (as per the embodiment of Figure 6) the radial position of the adjustment bolt 28 were fixed at its point of contact with the adjustment flexure 26d (i.e. at its tapered head), there would need to be substantial mechanical distortion of the foot portion 18 of the flexure 16d and/or of tapered head of the adjustment bolt in order to facilitate such further axial penetration of the adjustment bolt 28.

In contrast, with the present invention, the tapered head of the adjustment bolt 28 is free to move radially relative to the shaft 6 and ledge 7. Accordingly, rather than causing significant mechanical distortion of the foot portion 18 of the flexure 16d, the adjustment bolt 28 is free to tilt such that the tapered head of the adjustment bolt 28 can radially shift outwardly, which in turn causes it to push the disc body 5 radially outward, providing an even further radial displacement from the initial default radial location (shown by the dotted line in Figure 25a).

As will be understood, such a configuration also means that the manufacturing tolerance of the various parts of the assembly need not be so tight, whilst still enabling sufficient range and control of the radial adjustment.

The above solution relies on the threaded hole 32' having a large, or long, counter-sunk portion, such that the thread of the adjustment bolt 28 engages a threaded portion of the hole 32' only at its end distal the tapered head (as opposed to substantially along its entire length). As will be understood, instead of a large/long counter-sunk portion, the hole 32' could have a uniform diameter, but only be threaded towards its distal/bottom end. In another alternative embodiment, the hole 32' could have a uniform diameter and be threaded along its entire length, but the adjustment bolt 28 could be configured such that it only has a threaded portion towards its end distal its tapered head. Another solution is where the hole 32' has a uniform diameter and is threaded along its entire length, and the adjustment bolt 28 is threaded along its entire length, but where the hole 32' is oversized such that the adjustment bolt 28 is a substantially loose fit so as to enable the tapered head to free displace by up to +/- 100µm from its default/central position, even when the adjustment bolt 28 is fully engaged in the position shown in Figure 24b (i.e. with the tapered head engaged with the mounting flexure).

Another way of radially decoupling the radial adjustment device from the part (e.g. the shaft 6) on which the disc is mounted is to use a deformable member such as a plastic or rubber O-ring between the tapered head of the adjustment bolt 28 and the flexure 16d. In such a case it is not necessary to provide for tilting of the adjustment bolt 28. Another way is to use a radial adjustment device which does not engage the part (e.g. the shaft 6 or ledge 7). For instance, a cam element could be located within the flexure void 22 and its orientation within the flexure void could be manipulated so as control the amount by which it causes the flexure void to expand. However, it has been found that radial adjustment devices in the form of a threaded member having a tapered head, such as the adjustment bolt 28 described above, is advantageous over such cam devices because they can provide for finer control of the radial tweaking.

The above described embodiments comprise three of more flexures. However, as will be understood, this need not necessarily be the case. For instance, it is possible for the rotary scale member to comprise only one or two flexures, which facilitate adjustment of the lateral/radial position of the annular body of the rotary scale member. For instance, the at least one (or two) flexures could be configured such that the lateral/radial position of the annular body in at least one dimension can be achieved, and for example in two orthogonal dimension. For example, two opposing flexures which both have radial and tangential compliance can provide for adjustment of the lateral/radial position of the annular body in two orthogonal dimensions. In an alternative embodiment, such two opposing flexures could have only radial compliance (or tangential compliance), thereby facilitating lateral/radial adjustment in one dimension. Furthermore, in another embodiment, the rotary scale member could have just one flexure member. For instance, the rotary scale member could comprise a clamp part which is pushed over the shaft (e.g. a tight-fitting ring), and which is attached to the annular body of the rotary scale member via a single flexure which provides at least one of radial and tangential compliance. However, the above described embodiments providing three or more (e.g. pairs of) flexures have been found to be preferred solutions, which provide predictable and repeatable adjustment. Furthermore, solutions involving three or more flexures can be easier to manufacture, and help to maintain the compactness of the flexures and/or rotary scale member.

In the above described embodiments, the scale disc members are configured such that they require force-fitting onto the shaft, because the diameter of the hole defined by the mounting flexures is slightly smaller than the diameter of the shaft onto which they are mounted. However, as will be understood, the above described features are also useful for apparatus where the scale disc members do not require force-fitting onto the shaft. For example, the "wobbly" adjustment bolt features described in connection with Figures 23 to 25, could be used with apparatus in which the scale disc's hole diameter (e.g. defined by the mounting flexures) is slightly larger than the diameter of the shaft onto which they are mounted. Also, the concept of providing a scale disc member with mounting flexures which have both radial and tangential compliance could also be useful for situations in which the scale disc member is not force-fitted onto the shaft (e.g. in situations in which the diameter of the hole defined by the mounting flexures is slightly larger than the diameter of the shaft onto which they are mounted). Furthermore, the concept of providing an adjustment mechanism with a lever-ratio effect can also be useful with apparatus in which the scale disc's hole diameter defined by the mounting flexures is slightly larger than the diameter of the shaft onto which they are mounted.

## Claims

1. A method of mounting a rotary scale member on a part, the rotary scale member comprising an annular body on which a series of position features defining a scale is provided, and at least one flexure, the method comprising:
force-fitting the rotary scale member and the part together, whereby the at least one flexure is displaced and thereby urges the rotary scale member via a radial reaction force into engagement with the part so as to form a friction fit with the part such that the annular body of the rotary scale member self-locates at an initial default radial location with respect to the part; and
tweaking the radial location of the annular body relative to the part away from its initial default radial location to a new radial location.

2. A method as claimed in claim 1, in which the annular body comprises a planar disc, and in which the at least one flexure is provided substantially in plane with the planar disc.

3. A method as claimed in claim 1 or 2, in which the at least one flexure is configured to be compliant both radially and tangentially.

4. A method as claimed in any preceding claim, in which the rotary scale member comprises at least two, in particular at least three, flexures.

5. A method as claimed in claim 4, in which the at least two flexures are annularly spaced.

6. A method as claimed in any preceding claim, in which tweaking the radial location comprises manipulating at least one radial adjustment device.

7. A method as claimed in claim 6, in which tweaking the radial location comprises rotating at least one rotatable radial adjustment device to control a radial adjustment force on the rotary scale member.

8. A method as claimed in claim 7, in which the rotatable radial adjustment device directly engages the rotary scale member.

9. A method as claimed in claim 7, in which the radial adjustment force is applied to the rotary scale member via an intermediate member located between the rotatable radial adjustment device and the rotary scale member.

10. A method as claimed in claim 9, in which the intermediate member comprises a temporary jig member configured to fit with the rotary scale member at one or more predetermined configurations, in which the method comprises:
mounting the temporary jig member with respect to the rotary scale member,
tweaking the radial location of the annular body by manipulating at least one radial adjustment device which controls the radial adjustment force applied to the rotary scale member by the temporary jig member along a predetermined direction relative to the at least one flexure;
securing the annular body at its adjusted radial location, and
removing the temporary jig member.

11. A method as claimed in any preceding claim, in which the at least one flexure is located radially inward of the scale.

12. A method as claimed in any preceding claim, in which the at least one flexure is integrally formed on the annular body.

13. A method as claimed in any preceding claim, in which:
the at least one flexure comprises a radial adjustment flexure member, wherein the radial adjustment flexure member is connected to the annular body by at least one tangentially compliant support.

14. A method as claimed in any preceding claim, in which:
at least one flexure is radially deflectable in a plane perpendicular to the axis about which the scale features are formed on the rotary scale member,
a radial adjustment device acts on said at least one flexure so as change the extent of deflection of the flexure in said plane and thereby facilitate adjustment of the radial position of the rotary scale member relative to the part on which it is mounted, and
there is a smaller than 1-to-1 relationship between i) the effect the radial adjustment device has on the extent of displacement of the flexure in said plane at their point of interaction in the plane perpendicular to the axis about which the scale features are formed on the rotary scale member; and ii) the extent of the resulting radial displacement the flexure has on the annular body of the rotary scale member.

15. A rotary scale member comprising an annular body on which a series of position features defining a scale is provided, and at least one radially and tangentially compliant flexure.
